# EUROPEAN PATENT SPECIFICATION

(11) **EP 4 157 605 B1**
(45) Date of publication and mention of the grant of the patent: **03.07.2024**
(21) Application number: 21728914.9
(22) Date of filing: 27.05.2021
(51) Int. Cl.: B29C 44/06, B29C 44/04, B29C 44/08, B29C 41/06, B29C 41/22, B29C 41/52, B29C 41/04

(54) **PROCESS FOR PRODUCING SKIN/FOAM/SKIN STRUCTURE WITH HIGH SURFACE FINISH**
VERFAHREN ZUR HERSTELLUNG VON HAUT/SCHAUM/HAUTSTRUKTUR MIT HOHER OBERFLÄCHENGÜTE
PROCÉDÉ DE PRODUCTION D'UNE STRUCTURE PEAU/MOUSSE/PEAU À FINITION DE SURFACE ÉLEVÉE

(30) Priority: 28.05.2020 EP 20177060
(43) Date of publication of application: 05.04.2023
(73) Proprietor: TotalEnergies OneTech Belgium, 7181 Seneffe (BE)
(72) Inventor: MAZIERS, Eric, 7180 Seneffe (BE)
(74) Representative: De Clercq & Partners
(86) International application number: PCT/EP2021/064219
(87) International publication number: WO 2021/239883

(56) References cited:
- WO-A1-2008/074006
- WO-A1-2008/133535
- US-A- 4 913 944
- US-A1- 2006 022 365

## Description

### FIELD OF INVENTION

The present invention relates to a process for producing a skin/foam/skin structure. In particular, the process uses rotational moulding for producing the skin/foam/skin structure. The produced skin/foam/skin structure is suitable to be used in the car manufacturing, for example as car body specially for electrical car bodies.

### BACKGROUND OF THE INVENTION

There is a high interest in car bodies made from polymers when designing electrical cars. A polymer structure comprising a foamed layer between two skin layers, hereafter called skin/foam/skin structure is considered a suitable lightweight structure to build car bodies. However, the outer skin of such a skin/foam/skin structure needs to have a high surface finish. This way the amount of surface treatment after the formation of the car body can be minimized. Ideally, the outer skin of such a skin/foam/skin structure should not be treated at all after the formation of the car body. There is therefore a demand for polymer car bodies that once they are formed, do not need to be painted or coated, and have a surface finish as expected of car bodies. Preferably, the surface of the outer skin should have little to no surface defects, and also a high gloss.

To be suitable for car bodies, the skin/foam/skin structure should preferably have a low shrinkage and is preferably form-stable after being formed.

There is also a need to provide a fast production process of such skin/foam/skin structures. There is a need for production process that is highly controllable; where uniform skin/foam/skin structures can be produced. There is also a need for robust production process, where a maximum number of skin/foam/skin structures fulfil the desired specifications. There is also a need for energy efficient production process. There is also a need for easily recyclable skin/foam/skin structures.

Document US 2006/022365 A1 discloses a process for making a rotational moulded article with an outer layer of a compact polymer material and an inner layer of polymer consisting of one stage in which a first quantity of material to from the outer layer is put into a mould (1) which is rotated and heated, followed by a stage in which a second quantity of material for the inner layer is added and the rotation resumed. The heating is interrupted before the second quantity of material reaches its foaming temperature, while the rotation is continued until the second quantity of material reaches foaming temperature or above to form the inner layer.

### SUMMARY OF THE INVENTION

It has now surprisingly been found that the above needs can be attained either individually or in any combination by a process as disclosed herein.

In a first aspect, the present invention relates to a process for preparing a skin/foam/skin article, the process comprising at least the following steps:
a1) depositing an outer composition in a hollow mould, said outer composition having a melt temperature Tmₒᵤₜₑᵣ;
a2) rotational moulding said outer composition in the hollow mould, at an outer peak internal air temperature PIATₒᵤₜₑᵣ wherein Tmₒᵤₜₑᵣ < PIATₒᵤₜₑᵣ, thereby forming the outer skin layer,
   b1) depositing an intermediate composition in the hollow mould which comprises the outer skin layer, said intermediate composition having a melt temperature Tm_{intermediate};
   wherein said intermediate composition comprises at least one chemical blowing agent (CBA), said CBA having a decomposition temperature T_{decomp};
b2) rotational moulding said intermediate composition in the hollow mould, at an intermediate peak internal air temperature PIAT_{intermediate} wherein Tm_{intermediate} < PIAT_{intermediate} < T_{decomp}, thereby forming an intermediate layer;
c1) depositing an inner composition in the hollow mould, which comprises the outer skin layer and the intermediate layer, said inner composition having a melt temperature Tmᵢₙₙₑᵣ;
c2) rotational moulding said inner composition in the hollow mould at an inner peak internal air temperature PIATᵢₙₙₑᵣ wherein T_{decomp} < PIATᵢₙₙₑᵣ, thereby foaming the intermediate layer and forming the inner skin layer,
thereby obtaining said skin/foam/skin article.

In a second aspect, the present invention relates to a process for preparing a skin/foam/skin article, the process comprising at least the following steps:
a1) depositing an outer composition in a hollow mould, said outer composition having a melt temperature Tmₒᵤₜₑᵣ;
a2) rotational moulding said outer composition in the hollow mould at an outer peak internal air temperature PIATₒᵤₜₑᵣ wherein Tmₒᵤₜₑᵣ < PIATₒᵤₜₑᵣ, thereby forming the outer skin layer;
d1) depositing a bi-phasic composition in the hollow mould, which comprises the outer skin layer, said bi-phasic composition comprising:
   - a powder phase having a melt temperature Tm_{powder}; and,
   - a pellet phase or micro-pellet phase having a melt temperature Tmₚₑₗₗₑₜ wherein Tm_{powder} ≤ Tmₚₑₗₗₑₜ; preferably Tm_{powder} < Tmₚₑₗₗₑₜ;

   - wherein said powder phase comprises at least one chemical blowing agent (CBA), said CBA having a decomposition temperature T_{decomp} wherein Tm_{powder} < T_{decomp} and Tmₚₑₗₗₑₜ < T_{decomp};
d2) rotational moulding said bi-phasic composition in the hollow mould, at an intermediate peak internal air temperature PIAT_{intermediate} wherein Tm_{powder} < PIAT_{intermediate} < T_{decomp} and Tmₚₑₗₗₑₜ < PIAT_{intermediate} < T_{decomp}, thereby forming an intermediate layer;
d3) rotational moulding said bi-phasic composition in the hollow mould, at an inner peak internal air temperature PIATᵢₙₙₑᵣ wherein T_{decomp} < PIATᵢₙₙₑᵣ, thereby foaming the intermediate layer and forming the inner skin layer,
thereby obtaining said skin/foam/skin article.

The present invention also relates to a skin/foam/skin article obtained by a process according to the first or second aspect of the invention.

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

### BRIEF DESCRIPTION OF THE DRAWINGS

**Figure 1** is a photograph of segments of a skin/foam/skin structure produced by a method according to an embodiment of the invention.
**Figure 2A** and **Figure 2B** are photographs of a cross section of a skin/foam/skin structure produced by a method according to an embodiment of the invention.
**Figure 3** is a temperature (T) recording in function of the time (t) of the process for preparing a skin/foam/skin article according to an embodiment of the invention.

### DETAILED DESCRIPTION OF THE INVENTION

Before the present method used in the invention is described, it is to be understood that this invention is not limited to particular processes described herein, as such processes may, of course, vary. It is also to be understood that the terminology used herein is not intended to be limiting, since the scope of the present invention will be limited only by the appended claims. When describing the processes of the invention, the terms used are to be construed in accordance with the following definitions, unless a context dictates otherwise.

As used herein, the singular forms "a", "an", and "the" include both singular and plural referents unless the context clearly dictates otherwise. By way of example, "a composition" means one composition or more than one composition.

The terms "comprising", "comprises" and "comprised of' as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the embodiments can be used in any combination.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

Preferred features and embodiments of the processes of this invention are set herein below. Each embodiment of the invention so defined may be combined with any other embodiments unless clearly indicated to the contrary. In particular, any feature indicated as being preferred or advantageous may be combined with any other feature or features indicated as being preferred or advantageous. Hereto, the present invention is in particular captured by any one or any combination of one or more of the below embodiments.

In particular, the invention provides a process for preparing a skin/foam/skin article, the process comprising at least the following steps:
a1) depositing an outer composition in a hollow mould, said outer composition having a melt temperature Tmₒᵤₜₑᵣ;
a2) rotational moulding said outer composition in the hollow mould at an outer peak internal air temperature PIATₒᵤₜₑᵣ wherein Tmₒᵤₜₑᵣ < PIATₒᵤₜₑᵣ, thereby forming the outer skin layer;
b1) depositing an intermediate composition in the hollow mould which comprises the outer skin layer, said intermediate composition having a melt temperature Tm_{intermediate}; wherein said intermediate composition comprises at least one chemical blowing agent (CBA), said CBA having a decomposition temperature T_{decomp};
b2) rotational moulding said intermediate composition in the hollow mould at an intermediate peak internal air temperature PIAT_{intermediate} wherein Tm_{intermediate} < PIAT_{intermediate} < T_{decomp}, thereby forming an intermediate layer;
c1) depositing an inner composition in the hollow mould, which comprises the outer skin layer and the intermediate layer, said inner composition having a melt temperature Tmᵢₙₙₑᵣ;
c2) rotational moulding said inner composition in the hollow mould at an inner peak internal air temperature PIATᵢₙₙₑᵣ wherein T_{decomp} < PIATᵢₙₙₑᵣ, thereby foaming the intermediate layer and forming the inner skin layer,
thereby obtaining said skin/foam/skin article.

The present invention further provides a process for preparing a skin/foam/skin article, the process comprising at least the following steps:
a1) depositing an outer composition in a hollow mould, said outer composition having a melt temperature Tmₒᵤₜₑᵣ;
a2) rotational moulding said outer composition in the hollow mould at an outer peak internal air temperature PIATₒᵤₜₑᵣ wherein Tmₒᵤₜₑᵣ < PIATₒᵤₜₑᵣ, thereby forming the outer skin layer;
d1) depositing a bi-phasic composition in the hollow mould, which comprises the outer skin layer, said bi-phasic composition comprising:
   - a powder phase having a melt temperature Tm_{powder}; and,
   - a pellet phase or micro-pellet phase having a melt temperature Tmₚₑₗₗₑₜ wherein Tm_{powder} ≤ Tmₚₑₗₗₑₜ; preferably Tm_{powder} < Tmₚₑₗₗₑₜ;

   - wherein said powder phase comprises at least one chemical blowing agent (CBA), said CBA having a decomposition temperature T_{decomp} wherein Tm_{powder} < T_{decomp} and Tmₚₑₗₗₑₜ < T_{decomp};
d2) rotational moulding said bi-phasic composition in the hollow mould, at an intermediate peak internal air temperature PIAT_{intermediate} wherein Tm_{powder} < PIAT_{intermediate} < T_{decomp} and Tmₚₑₗₗₑₜ < PIAT_{intermediate} < T_{decomp}, thereby forming an intermediate layer;
d3) rotational moulding said bi-phasic composition in the hollow mould, at an inner peak internal air temperature PIATᵢₙₙₑᵣ wherein T_{decomp} < PIATᵢₙₙₑᵣ, thereby foaming the intermediate layer and forming the inner skin layer,
thereby obtaining said skin/foam/skin article.

In some embodiments, the rotational moulding is performed in a direct heating rotational moulding machine.

In some embodiments, PIATₒᵤₜₑᵣ, is at least 20°C higher than the melt temperature of the outer composition (Tmₒᵤₜₑᵣ), preferably at least 40°C higher than Tmₒᵤₜₑᵣ, preferably at least 50°C higher than Tmₒᵤₜₑᵣ, , preferably at least 60°C higher than Tmₒᵤₜₑᵣ, preferably at least 70°C higher than Tmₒᵤₜₑᵣ, preferably at least 80°C higher than Tmₒᵤₜₑᵣ, preferably at least 90°C higher than Tmₒᵤₜₑᵣ; preferably at least 100°C higher than Tmₒᵤₜₑᵣ.

In some embodiments, PIATₒᵤₜₑᵣ, is at least 20°C higher to at most 130°C higher than the melt temperature of the outer composition (Tmₒᵤₜₑᵣ), preferably at least 40°C higher to at most 120°C than Tmₒᵤₜₑᵣ, preferably at least 50°C higher to at most 110°C than Tmₒᵤₜₑᵣ, preferably at least 60°C higher to at most 105°C than Tmₒᵤₜₑᵣ, preferably at least 70°C higher to at most 100°C than Tmₒᵤₜₑᵣ, preferably at least 80°C higher to at most 95°C than Tmₒᵤₜₑᵣ, preferably at least 90°C higher to at most 100°C than Tmₒᵤₜₑᵣ.

In some embodiments, PIATₒᵤₜₑᵣ is at least 140°C, preferably at least 150°C, preferably at least 160°C, preferably at least 170°C, preferably at least 180°C, preferably at least 190°C, preferably at least 200°C, preferably at least 210°C, preferably at least 220°C.

In some embodiments, PIATₒᵤₜₑᵣ is at most 260°C, preferably is at most 255°C, preferably is at most 245°C, preferably is at most 240°C, preferably is at most 235°C, preferably is at most 230°C, preferably is at most 225°C, preferably is at most 220°C.

In some embodiments, PIATₒᵤₜₑᵣ is at least 140°C to at most 260°C, preferably at least 150°C to at most 255°C, preferably at least 160°C to at most 250°C, preferably at least 170°C to at most 245°C, preferably at least 180°C to at most 240°C, preferably at least 190°C to at most 235°C, preferably at least 200°C to at most 230°C.

In some embodiments, PIAT_{intermediate} is at least 3°C below the decomposition temperature T_{decomp} of the CBA, preferably at least 4°C below T_{decomp}, preferably at least 5°C below T_{decomp}, preferably at least 7°C below T_{decomp}, .

In some embodiments, PIAT_{intermediate} is at least 1°C higher than the melt temperature of the intermediate composition (Tm_{intermediate}), preferably at least 2°C higher than Tm_{intermediate}, preferably at least 3°C higher than Tm_{intermediate}, preferably at least 4°C higher than Tm_{intermediate}, preferably at least 5°C higher than Tm_{intermediate}, preferably at least 7°C higher than Tm_{intermediate}.

In some embodiments, PIAT_{intermediate} is at least 1°C higher than Tm_{intermediate} and at least 3°C lower than T_{decomp}, preferably at least 4°C higher than Tm_{intermediate} and at least 4°C lower than T_{decomp}, preferably at least 3°C higher than Tm_{intermediate} and at least 5°C lower than T_{decomp}, preferably at least 4°C higher than Tm_{intermediate} and at least 5°C lower than T_{decomp}, preferably at least 5°C higher than Tm_{intermediate} and at least 5°C lower than T_{decomp}, preferably at least 7°C higher than Tm_{intermediate} and at least 5°C lower than T_{decomp}, preferably at least 10°C higher than Tm_{intermediate} and at least 5°C lower than T_{decomp}.

In some embodiments, PIAT_{intermediate} is at least 125°C, preferably at least 127°C, preferably at least 130°C, preferably at least 133°C, preferably at least 135°C.

In some embodiments, PIAT_{intermediate} is at most 170°C, preferably at most 165°C, preferably at most 160°C, preferably at most 155°C, preferably at most 150°C, preferably at most 140°C.

In some embodiments, PIAT_{intermediate} is at least 125°C to at most 170°C, preferably at least 127°C to at most 160°C, preferably at least 130°C to at most 150°C, preferably at least 133°C to at most 140°C.

In some embodiments, PIATᵢₙₙₑᵣ is higher than the decomposition temperature of the CBA (T_{decomp}) and lower than PIATₒᵤₜₑᵣ, preferably at least 3°C higher than T_{decomp} and lower than PIATₒᵤₜₑᵣ, preferably at least 5°C higher than T_{decomp} and lower than PIATₒᵤₜₑᵣ, preferably at least 7°C higher than T_{decomp} and lower than PIATₒᵤₜₑᵣ, preferably at least 10°C higher than T_{decomp} and lower than PIATₒᵤₜₑᵣ.

In some embodiments, PIATᵢₙₙₑᵣ is higher than the decomposition temperature of the CBA (T_{decomp}) and lower than PIATₒᵤₜₑᵣ, preferably at least 3°C higher than T_{decomp} and at least 5°C lower than PIATₒᵤₜₑᵣ, preferably at least 5°C higher than T_{decomp} and at least 10°C lower than PIATₒᵤₜₑᵣ, preferably at least 7°C higher than T_{decomp} and at least 15°C lower than PIATₒᵤₜₑᵣ.

In some embodiments, PIATᵢₙₙₑᵣ is lower than PIATₒᵤₜₑᵣ, preferably at least 5°C lower than PIATₒᵤₜₑᵣ, preferably at least 10°C lower than PIATₒᵤₜₑᵣ, preferably at least 15°C lower than PIATₒᵤₜₑᵣ, preferably at least 20°C lower than PIATₒᵤₜₑᵣ, preferably at least 25°C lower than PIATₒᵤₜₑᵣ, preferably at least 30°C lower than PIATₒᵤₜₑᵣ, preferably at least 35°C lower than PIATₒᵤₜₑᵣ.

In some embodiments, PIATᵢₙₙₑᵣ is at least 130°C, preferably at least 135°C, preferably at least 140°C, preferably at least 145°C.

In some embodiments, PIATᵢₙₙₑᵣ is at most 170°C, preferably PIATᵢₙₙₑᵣ is at most 165°C, preferably PIATᵢₙₙₑᵣ is at most 160°C, preferably PIATᵢₙₙₑᵣ is at most 155°C, preferably PIATᵢₙₙₑᵣ is at most 152°C.

In some embodiments, PIATᵢₙₙₑᵣ is at least 130°C to at most 170°C, preferably at least 135°C to at most 165°C, preferably at least 140°C to at most 160°C, preferably at least 145°C to at most 155°C.

In some embodiments, PIATₒᵤₜₑᵣ is maintained for at least ½ min, preferably at least 1 min, preferably at least 2 min, preferably at least 3 min, preferably at least 4 min, preferably at least 5 min.

In some embodiments, PIATₒᵤₜₑᵣ is maintained for at most 10 min, preferably at most 9 min, preferably at most 8 min, preferably at most 7 min, preferably at most 6 min, preferably at most 5 min.

In some embodiments, PIATₒᵤₜₑᵣ is maintained for at least ½ min to at most 10 min, preferably at least 1 min to at most 9 min, preferably at least 2 min to at most 8 min, preferably at least 3 min to at most 7 min, preferably at least 4 min to at most 6 min, preferably for 5 min.

In some embodiments, PIAT_{intermediate} is maintained for at least ½ min, preferably at least 1 min, preferably at least 2 min, preferably at least 3 min, preferably at least 4 min, preferably at least 5 min.

In some embodiments, PIAT_{intermediate} is maintained for at most 10 min, preferably at most 9 min, preferably at most 8 min, preferably at most 7 min, preferably at most 6 min, preferably at most 5 min.

In some embodiments, PIAT_{intermediate} is maintained for at least ½ min to at most 10 min, preferably at least 1 min to at most 9 min, preferably at least 2 min to at most 8 min, preferably at least 3 min to at most 7 min, preferably at least 4 min to at most 6 min, preferably for 5 min.

In some embodiments, PIATᵢₙₙₑᵣ is maintained for at least ½ min, preferably at least 1 min, preferably at least 2 min, preferably at least 3 min, preferably at least 4 min, preferably at least 5 min.

In some embodiments, PIATᵢₙₙₑᵣ is maintained for at most 10 min, preferably at most 9 min, preferably at most 8 min, preferably at most 7 min, preferably at most 6 min, preferably at most 5 min.

In some embodiments, PIATᵢₙₙₑᵣ is maintained for at least ½ min to at most 10 min, preferably at least 1 min to at most 9 min, preferably at least 2 min to at most 8 min, preferably at least 3 min to at most 7 min, preferably at least 4 min to at most 6 min, preferably for 5 min.

In some embodiments, the process comprises a step b3), performed after step b2) and preferably before step c1);
said step b3) comprising:
- cooling the mould, preferably actively cooling the mould, at least to an internal air temperature below T_{decomp}, preferably below Tmₒᵤₜₑᵣ.

In some embodiments, the process comprises a step f), performed after step c2), or d3);
said step f) comprising:
- cooling the mould and demoulding the skin/foam/skin structure.

In some embodiments, the outer composition comprises a polyolefin.

In some embodiments, the intermediate composition comprises a polyolefin.

In some embodiments, the inner composition comprises a polyolefin.

In some embodiments, the outer composition comprises a polyethylene.

In some embodiments, the intermediate composition comprises a polyethylene.

In some embodiments, the inner composition comprises a polyethylene.

In some embodiments, the outer composition and the intermediate composition comprises a polyethylene.

In some embodiments, the polyethylene in the outer composition, the intermediate composition and/or the inner composition is a linear low density polyethylene, a medium density polyethylene or a high density polyethylene.

In some embodiments, the polyethylene in the outer composition, the intermediate composition and/or the inner composition is a metallocene-produced polyethylene or a blend of different polyethylene technologies.

In some embodiments, the polyethylene in the outer composition, the intermediate composition and/or the inner composition is polyethylene copolymer, preferably a polyethylene copolymer wherein the comonomer is at least one C₃-C₂₀ alpha-olefin co-monomer, preferably C₃-C₁₂ alpha-olefins, preferably said comonomer can be, selected from propylene, n-butene, iso-butene, n-pentene, iso-pentene, 1-hexene, 2-hexene, 3-hexene, 1-octene, 1-decene, 1-dodecene, 1-tetradecene, 1-hexadecene, 1-octadecene, and 1-eicosene, or a mixture thereof; preferably 1-hexene.

In some embodiments, the outer composition and/or intermediate composition comprises:
- at least 40 wt% to at most 99 wt% of a metallocene-prepared homo- or co-polymer of ethylene or a mixture thereof, based on the weight outer composition;
- at least 1 wt% to at most 60 wt% of a functionalised polyolefin (FPO) or of an ionomer or of a polyolefin (PO) grafted to a non-polyolefin (NPO) in the form of a block copolymer((PO)g-NPO), or of a mixture thereof.

In some embodiments, the inner composition comprises:
- at least 40.0 wt% to at most 100.0 wt% of a polyethylene homo- or co-polymer or a mixture thereof, based on the weight of the inner composition, said polyethylene being the same as or different from that of outer composition;
- 0.0 to at most 60.0 wt% of a functionalised polyolefin (FPO) or of an ionomer or of a polyolefin (PO) grafted to a non-polyolefin (NPO) in the form of a block copolymer ((PO)g-NPO), or of a mixture thereof.

In some embodiments, the outer composition comprises:
- at least 70.0 wt% to at most 99.0 wt%, preferably at least 80.0 wt% to at most 98.0 wt% polyethylene; and,
- at least 0.5 wt% to at most 30.0 wt%, preferably at least 1.0 wt% to at most 20.0 wt% of functionalised polyethylene or ionomer, based on the weight of the outer composition.

In some embodiments, the inner composition comprises:
- at least 90.0 wt% to at most 100.0 wt%, preferably at least 95.0 wt% to at most 100.0 wt%of polyethylene; and,
- 0.0 to at most 10.0 wt%, preferably 0.0 to at most 5.0 wt% of functionalised polyethylene or ionomer, based on the weight of skin layer b) composition.

In some embodiments, the melt index of the polyethylene in the outer composition, the intermediate composition and/or the inner composition is at least 1.0 g / 10 min, preferably of at least 2.0 g / 10min, preferably of at least 3.0 g / 10min, preferably of at least 4.0 g / 10min, preferably of at least 5.0 g / 10min, preferably of at least 6.0 g / 10min, determined according to ISO 1133-1:2011 at 190°C, 2.16 kg.

In some embodiments, the melt index of the polyethylene in the outer composition, the intermediate composition and/or the inner composition is at most 25.0 g/10 min, preferably of at most 20.0 g / 10 min, preferably of at most 15.0 g / 10 min, preferably of at most 10.0 g / 10 min, determined according to ISO 1133-1:2011 at 190°C, 2.16 kg.

In some embodiments, the density of the polyethylene in the outer composition, the intermediate composition and/or the inner composition is at least 0.920 g/cm³, preferably of at least 0.925 g/cm³, preferably of at least 0.930 g/cm³ according to ISO 1183:2012 method A at 23 °C.

In some embodiments, the density of the polyethylene in the outer composition, the intermediate composition and/or the inner composition is at most 0.965 g/cm³, preferably of at most 0.960 g/cm³, preferably of at most 0.955 g/cm³, preferably of at most 0.952 g/cm³determined according to ISO 1183:2012 method A at 23 °C.

In some embodiments, the outer composition, the intermediate composition and/or the inner composition is essentially polyester free.

In some embodiments, the chemical blowing agent is an organic chemical blowing agent, preferably 4,4'-oxy-bis(benzenesulfohydrazide).

In some embodiments, the outer composition, the intermediate composition and/or the inner composition are in a powder form.

In some embodiments, the average particle size of the powder is at most 700 µm, preferably at most 500µm, for example 35 mesh powder.

In some embodiments, the pellet phase comprises pellets having an average particle size of at least 1500 µm, preferably at least 3000 µm.

In some embodiments, the pellet phase comprises micro-pellets having an average particle size of at least 500 µm to at most 1500 µm.

In some embodiments, the pellet phase comprises pellets with an average particle size at least equal or greater than the average particle size of the powder, preferably at least 10 times greater, preferably at least 20 times greater, preferably at least 50 times greater, preferably at least 100 times greater than the average particle size of the powder phase.

In some embodiments, the mould comprises electrical heating elements, or wherein the mould is heated by heating liquid.

The invention also provides a skin/foam/skin article obtained by a process comprising at least the following steps:
a1) depositing an outer composition in a hollow mould, said outer composition having a melt temperature Tmₒᵤₜₑᵣ;
a2) rotational moulding said outer composition in the hollow mould at an outer peak internal air temperature PIATₒᵤₜₑᵣ wherein Tmₒᵤₜₑᵣ < PIATₒᵤₜₑᵣ, thereby forming the outer skin layer;
b1) depositing an intermediate composition in the hollow mould which comprises the outer skin layer, said intermediate composition having a melt temperature Tm_{intermediate}; wherein said intermediate composition comprises at least one chemical blowing agent (CBA), said CBA having a decomposition temperature T_{decomp};
b2) rotational moulding said intermediate composition in the hollow mould at an intermediate peak internal air temperature PIAT_{intermediate} wherein Tm_{intermediate} < PIAT_{intermediate} < T_{decomp}, thereby forming an intermediate layer;
c1) depositing an inner composition in the hollow mould, which comprises the outer skin layer and the intermediate layer, said inner composition having a melt temperature Tmᵢₙₙₑᵣ;
c2) rotational moulding said inner composition in the hollow mould at an inner peak internal air temperature PIATᵢₙₙₑᵣ wherein T_{decomp} < PIATᵢₙₙₑᵣ, thereby foaming the intermediate layer and forming the inner skin layer,
thereby obtaining said skin/foam/skin article.

The invention also provides a skin/foam/skin article obtained by a process comprising at least the following steps:
a1) depositing an outer composition in a hollow mould, said outer composition having a melt temperature Tmₒᵤₜₑᵣ;
a2) rotational moulding said outer composition in the hollow mould at an outer peak internal air temperature PIATₒᵤₜₑᵣ wherein Tmₒᵤₜₑᵣ < PIATₒᵤₜₑᵣ, thereby forming the outer skin layer;
d1) depositing a bi-phasic composition in the hollow mould, which comprises the outer skin layer, said bi-phasic composition comprising:
   - a powder phase having a melt temperature Tm_{powder}; and,
   - a pellet phase or micro-pellet having a melt temperature Tmₚₑₗₗₑₜ wherein Tm_{powder} ≤ Tmₚₑₗₗₑₜ; preferably Tm_{powder} < Tmₚₑₗₗₑₜ;

   - wherein said powder phase comprises at least one chemical blowing agent (CBA), said CBA having a decomposition temperature T_{decomp} wherein Tm_{powder} < T_{decomp} and Tmₚₑₗₗₑₜ < T_{decomp};
d2) rotational moulding said bi-phasic composition in the hollow mould, at an intermediate peak internal air temperature PIAT_{intermediate} wherein Tm_{powder}< PIAT_{intermediate} < T_{decomp} and Tmₚₑₗₗₑₜ < PIAT_{intermediate} < T_{decomp}, thereby forming an intermediate layer;
d3) rotational moulding said bi-phasic composition in the hollow mould, at an inner peak internal air temperature PIATᵢₙₙₑᵣ wherein T_{decomp} < PIATᵢₙₙₑᵣ, thereby foaming the intermediate layer and forming the inner skin layer,
thereby obtaining said skin/foam/skin article.

More particular, the invention provides a skin/foam/skin article obtained by a process according to any one of the embodiments disclosed herein.

The present invention provides a process preparing a skin/foam/skin article by rotational moulding, preferably wherein the first rotational moulding step is carried out at a higher peak internal temperature then the following rotational moulding steps. Preferably the foam is only formed during the rotational moulding in the inner skin layer.

More in particular, the present invention provides a process for preparing a skin/foam/skin article, the process comprising at least the following steps:
a1) depositing an outer composition in a hollow mould, said outer composition having a melt temperature Tmₒᵤₜₑᵣ;
a2) rotational moulding said outer composition in the hollow mould, at an outer peak internal air temperature PIATₒᵤₜₑᵣ wherein Tmₒᵤₜₑᵣ < PIATₒᵤₜₑᵣ, thereby forming the outer skin layer,
b1) depositing an intermediate composition in the hollow mould which comprises the outer skin layer, said intermediate composition having a melt temperature Tm_{intermediate}; wherein said intermediate composition comprises at least one chemical blowing agent (CBA), said CBA having a decomposition temperature T_{decomp};
b2) rotational moulding said intermediate composition in the hollow mould, at an intermediate peak internal air temperature PIAT_{intermediate} wherein Tm_{intermediate} < PIAT_{intermediate} < T_{decomp}, thereby forming an intermediate layer;
c1) depositing an inner composition in the hollow mould, which comprises the outer skin layer and the intermediate layer, said inner composition having a melt temperature Tmᵢₙₙₑᵣ,
c2) rotational moulding said inner composition in the hollow mould at an inner peak internal air temperature PIATᵢₙₙₑᵣ wherein T_{decomp} < PIATᵢₙₙₑᵣ, thereby foaming the intermediate layer and forming the inner skin,
thereby obtaining said skin/foam/skin article.

The present invention further provides a process for preparing a skin/foam/skin article, the process comprising at least the following steps:
a1) depositing an outer composition in a hollow mould, said outer composition having a melt temperature Tmₒᵤₜₑᵣ;
a2) rotational moulding said outer composition in the hollow mould at an outer peak internal air temperature PIATₒᵤₜₑᵣ wherein Tmₒᵤₜₑᵣ < PIATₒᵤₜₑᵣ, thereby forming the outer skin layer;
d1) depositing a bi-phasic composition in the hollow mould, which comprises the outer skin layer, said bi-phasic composition comprising:
   - a powder phase having a melt temperature Tm_{powder}; and,
   - a pellet phase or micro-pellet phase having a melt temperature Tmₚₑₗₗₑₜ wherein Tm_{powder} ≤ Tmₚₑₗₗₑₜ; preferably Tm_{powder} < Tmₚₑₗₗₑₜ;

   - wherein said powder phase comprises at least one chemical blowing agent (CBA), said CBA having a decomposition temperature T_{decomp} wherein Tm_{powder} < T_{decomp} and Tmₚₑₗₗₑₜ < T_{decomp};
d2) rotational moulding said bi-phasic composition in the hollow mould, at an intermediate peak internal air temperature PIAT_{intermediate} wherein Tm_{powder} < PIAT_{intermediate} < T_{decomp} and Tmₚₑₗₗₑₜ < PIAT_{intermediate} < T_{decomp}, thereby forming an intermediate layer;
d3) rotational moulding said bi-phasic composition in the hollow mould, at an inner peak internal air temperature PIATᵢₙₙₑᵣ wherein T_{decomp} < PIATᵢₙₙₑᵣ, thereby foaming the intermediate layer and forming the inner skin layer,
thereby obtaining said skin/foam/skin article.

As used herein, the term "rotational moulding" refers to a process wherein a composition, preferably comprising at least one thermoplastic polymer, is added into a hollow mould, and rotating said mould so that all the points of the internal surface of the mould are in contact with the polymer while heating the mould, so as to deposit the aforementioned molten composition on the internal surface of the mould. Thereafter, a stage of cooling allows the solidification of the plastic article or layer, which may then be removed from the mould.

As used herein the "internal air temperature" is the temperature of the air or gasses present inside the mould during rotational moulding. Said internal air temperature is preferably measured inside the mould by a temperature sensor, such as a thermocouple.

As used herein the "peak internal air temperature", abbreviated as PlAT, is the maximum internal air temperature during a rotational moulding step.

As used herein the term "outer skin" or "outer skin layer" refers to the first layer that is rotational moulded in the mould. When a hollow object is rotational moulded, it is the layer on the outside of the object.

As used herein the term "inner skin" or "inner skin layer" refers to the last layer that is rotational moulded in the mould. When a hollow object is rotational moulded, it is the layer on the inside of the object.

As used herein the term "intermediate layer" refers to a layer that is rotational moulded in after the outer skin layer but before the inner skin layer. Preferably, a non-reacted chemical blowing agent is present in the intermediate layer. It is only when the chemical blowing agent has reacted that the intermediate layer becomes a 'foam layer".

Unless otherwise mentioned, melt temperatures, like Tmₒᵤₜₑᵣ, Tm_{intermediate}, Tmᵢₙₙₑᵣ, Tm_{powder} and Tmₚₑₗₗₑₜ, are measured by Differential scanning calorimetry (DSC), during the first heating at 10°C/min. Preferably on a Setaram DSC 131 apparatus, under continuous flow of helium and using aluminum capsules.

In some embodiments, the rotational moulding is performed in a direct heating rotational moulding machine. Such machines may allow for a better control of internal air temperature compared to oven-based machines. Such direct heating rotational moulding machines may achieve higher internal air temperatures compared to oven-based machines. Such direct heating rotational moulding machines may heat up the internal air of the mould faster compared to oven-based machines.

As used herein, the term "direct heating rotational moulding machine" refer to rotational moulding machine wherein heating is provided in the material of the mould or on the outer surface or the mould. Said heating can be provided by electrical heating elements, or by a heated fluid that may be forced through ducts in or on top of the mould. Examples of direct heating rotational moulding machines includes but are not limited to:
- Leonardo machine by Persico;
- Smart machine by Persico;
- Robomould machines by AMS.

Oven-based rotational moulding machines, wherein a mould is rotated inside an oven, are not direct heating rotational moulding machines.

In some embodiments, PIATₒᵤₜₑᵣ is at least 170 °C, preferably at least 180 °C, preferably at least 190 °C, preferably at least 200 °C.

In some embodiments, where the MI2 of the polyethylene in the outer composition is more than 8 g/10 min, PIATₒᵤₜₑᵣ is preferably at least 170°C to at most 200°C, preferably at least 180°C to at most 190°C.

In some embodiments, where the MI2 of the polyethylene in the outer composition is in the range 4 to 8 g/10 min, preferably 4 to 6 g/10 min, PIATₒᵤₜₑᵣ is preferably at least 190°C, preferably at least 200°C, preferably at least 210°C.

In some embodiments, the outer composition, the intermediate composition and the inner composition comprise a polyethylene. This has the advantage that the produced skin/foam/skin structure can be easily processed, easily recycled, has high impact properties, high elongation properties for foaming and is easily available.

In some embodiments, the process comprises at least the following steps:
a1) depositing an outer composition in a hollow mould, said outer composition comprising a polyethylene;
a2) rotational moulding said outer composition in the mould, at an outer peak internal air temperature PIATₒᵤₜₑᵣ wherein 180°C< PIATₒᵤₜₑᵣ preferably 190°C< PIATₒᵤₜₑᵣ, thereby forming the outer skin layer;
b1) depositing an intermediate composition in the hollow mould which comprises the outer skin layer, said intermediate composition comprising a polyethylene;
   wherein said intermediate composition comprises at least one chemical blowing agent (CBA), said CBA preferably having a decomposition temperature 140°C < T_{decomp}, preferably 140°C < T_{decomp} < 160°C;
b2) rotational moulding said intermediate composition in the mould, at an intermediate peak internal air temperature PIAT_{intermediate} wherein 125°C < PIAT_{intermediate} < 140°C, preferably 125°C < PIAT_{intermediate} < 138°C, thereby forming an intermediate layer;
c1) depositing an inner composition in the hollow mould, which comprises the outer skin layer and the intermediate layer, said inner composition comprising a polyethylene;
c2) rotational moulding said inner composition in the mould at an inner peak internal air temperature PIATᵢₙₙₑᵣ wherein 140°C < PIATᵢₙₙₑᵣ, preferably 145°C < PIATᵢₙₙₑᵣ , preferably 145°C < PIATᵢₙₙₑᵣ < 170°C thereby foaming the intermediate layer and forming the inner skin layer.

In some embodiments, the process comprises at least the following steps:
a1) depositing an outer composition in a hollow mould, said outer composition comprising a polyethylene;
a2) rotational moulding said outer composition in the mould, at an outer peak internal air temperature PIATₒᵤₜₑᵣ wherein 180°C< PIATₒᵤₜₑᵣ, preferably 190°C< PIATₒᵤₜₑᵣ, thereby forming the outer skin layer,
e1) depositing a bi-phasic composition in the hollow mould, which comprises the outer skin layer, said bi-phasic composition comprising:
   - a powder phase polyethylene; and,
   - a pellet phase or micro-pellet phase polyethylene;
   wherein said powder phase polyethylene comprises at least one chemical blowing agent (CBA), said CBA preferably having a decomposition temperature 140°C < T_{decomp}, preferably 140°C < T_{decomp} < 160°C;
e2) rotational moulding said bi-phasic composition in the mould, at an intermediate peak internal air temperature PIAT_{intermediate} wherein 125°C < PIAT_{intermediate} < 140°C, preferably 130°C < PIAT_{intermediate} < 138°C, thereby forming an intermediate layer, and
e3) rotational moulding said bi-phasic composition in the mould, at an inner peak internal air temperature PIATᵢₙₙₑᵣ wherein PIATᵢₙₙₑᵣ is at least 140°C, preferably at least 150°C, thereby foaming the intermediate layer and forming the inner skin layer.

In some embodiments, the outer composition, intermediate composition and/or inner composition comprises a polyolefin which can be selected from polyethylene or polypropylene.

In some embodiments, the outer composition, intermediate composition and/or inner composition comprises homopolymers or copolymers of ethylene and optionally a functionalised polyethylene or ionomer. In this description, copolymers are prepared from one monomer and one or more comonomers. Preferably the outer composition, intermediate composition and inner composition comprise a polyethylene.

In an embodiment, the polyethylene is a homopolymer. The term "ethylene homopolymer" as used herein is intended to encompass polymers which consist essentially of repeat units deriving from ethylene. Homopolymers may, for example, comprise at least 99.8% preferably 99.9% by weight of repeats units derived from ethylene, as determined for example by ¹³C NMR spectrometry.

In another embodiment, the polyethylene is an ethylene copolymer. The term "ethylene copolymer" as used herein is intended to encompass polymers which consist essentially of repeat units deriving from ethylene and at least one other C₃-C₂₀ alpha-olefin co-monomer, preferably wherein the co-monomer is 1-hexene.

As used herein, the term "co-monomer" refers to olefin co-monomers which are suitable for being polymerized with alpha-olefin monomer. Co-monomers may comprise but are not limited to aliphatic C₃-C₂₀ alpha-olefins, preferably C₃-C₁₂ alpha-olefins. Examples of suitable aliphatic C₃-C₂₀ alpha-olefins include propylene, 1-butene, 1-pentene, 4-methyl-1-pentene, 1-hexene, 1-octene, 1-decene, 1-dodecene, 1-tetradecene, 1-hexadecene, 1-octadecene, and 1-eicosene. In some preferred embodiments, said co-monomer is 1-hexene.

In some embodiments, the polyethylene is a metallocene-catalyzed polyethylene. According to this invention the terms "metallocene-catalyzed polyethylene", "polyethylene prepared using at least one metallocene catalyst composition", and the term "polyethylene prepared in the presence of at least one metallocene catalyst", are synonyms. The narrow molecular distribution obtained when using metallocene catalyst compared to for example Ziegler-Natta catalyst, may allow better impact properties and shorter cycle time in processing.

In some embodiments, the polyethylene is a blend of different polyethylene technologies, wherein said blend can encompass different polyethylene prepared using for example metallocene catalyst, Ziegler-Natta Catalyst, Chromium Catalyst, and other polyethylenes.

As used herein, the term "catalyst" refers to a substance that causes a change in the rate of a polymerization reaction. It is especially applicable to catalysts suitable for the polymerization of ethylene to polyethylene.

The term "metallocene catalyst" or "metallocene" for short is used herein to describe any transition metal complexes comprising metal atoms bonded to one or more ligands. The preferred metallocene catalysts are compounds of Group IV transition metals of the Periodic Table such as titanium, zirconium, hafnium, etc., and have a coordinated structure with a metal compound and ligands composed of one or two groups of cyclopentadienyl, indenyl, fluorenyl or their derivatives. The structure and geometry of the metallocene can be varied to adapt to the specific need of the producer depending on the desired polymer. Metallocenes typically comprise a single metal site, which allows for more control of branching and molecular weight distribution of the polymer. Monomers are inserted between the metal and the growing chain of polymer.

In some embodiments, the polyethylene in the outer composition, intermediate composition and/or inner composition is a homo- or co-polymer of ethylene catalyzed with a catalyst comprising a metallocene on a silica/aluminoxane support. Suitable metallocene catalyst can be selected from the group comprising bis(iso-butylcyclopentadienyl) zirconium dichloride, bis(pentamethylcyclopentadienyl) zirconium dichloride, bis(tetrahydroindenyl) zirconium dichloride, bis(indenyl) zirconium dichloride, bis(1,3-dimethylcyclopentadienyl) zirconium dichloride, bis(methylcyclopentadienyl) zirconium dichloride, bis(n-butylcyclopentadienyl) zirconium dichloride, and bis(cyclopentadienyl) zirconium dichloride; and preferably selected from the group comprising bis(cyclopentadienyl) zirconium dichloride, bis(tetrahydroindenyl) zirconium dichloride, bis(indenyl) zirconium dichloride, and bis(1-methyl-3-butylcyclopentadienyl)zirconium dichloride. In another embodiment, the metallocene can be a bridged metallocene, for example, selected from the group comprising ethylene bis(4,5,6,7-tetrahydro-1-indenyl) zirconium dichloride, ethylene bis(1-indenyl) zirconium dichloride, dimethylsilylene bis(2-methyl-4-phenyl-inden-1-yl) zirconium dichloride, dimethylsilylene bis(2-methyl-1H-cyclopenta[a]naphthalen-3-yl) zirconium dichloride, cyclohexylmethylsilylene bis[4-(4-tert-butylphenyl)-2-methyl-inden-1-yl] zirconium dichloride, dimethylsilylene bis[4-(4-tert-butylphenyl)-2-(cyclohexylmethyl)inden-1-yl] zirconium dichloride. Bridged bis(tetrahydroindenyl) metallocenes are preferred. More preferably, the metallocene component is ethylene-bis-tetrahydroindenyl zirconium dichloride or dimethylsilylene-bis(2-methyl-4-phenyl-indenyl) zirconium dichloride. The most preferred metallocene component is ethylene-bis-tetrahydroindenyl zirconium dichloride.

Preferably, the polyethylene can have a density of at least 0.920 g/cm³ and preferably of at least 0.930 g/cm³. The density can be of at most 0.965 g/cm³, preferably of at most 0.960 g/cm³. Most preferably, the polyethylene has a density of 0.932 to 0.952 g/cm³. The density is measured following the method of standard test ISO 1183:2012 at 23°C.

Preferably, the polyethylene has a melt index MI2 of at least 1 dg/min, preferably of at least 1.5 dg/min, more preferably of at least 2 dg/min. It is preferably at most 25 dg/min, more preferably at most 20 dg/min. Most preferably, the polyethylene has an MI2 of 1 dg/min to 10 dg/min. The melt flow index MI2 is measured following the method of standard test ISO 1133-1:2011 at a temperature of 190°C and a load of 2.16 kg.

In some embodiments, the polyethylene in the outer composition, the intermediate composition and/or the inner composition may have a bi- or multimodal molecular weight distribution, i.e. they may be a blend of two or more polyethylenes with different molecular weight distributions, which can be blended either physically or chemically, i.e. produced sequentially in two or more reactors.

The functionalised polyolefins, if present, can be polyolefins grafted with a material that provides polarity and/or reactivity and they therefore depend upon the nature of the adjacent layers. For example, the polyolefins can be grafted with anhydride, and preferably, the functionalised polyolefin is polyethylene or polypropylene, more preferably, it is polyethylene. Alternatively, the functionalised polyolefin is an ionomer. Grafted polyethylene provides excellent adhesion properties whereas ionomers enhance mechanical properties. In some embodiments, the functionalised polyolefin is a mixture of ionomer and grafted polyethylene.

An ionomer is a polyelectrolyte that comprises copolymers containing both electrically neutral repeating units and a fraction of ionised units, usually representing at most 15 percent of the polymer. They link in such a way that, even though they are stiff at room temperature, the bonds may be broken down thermally and the new linkages will cause the material to act as though it were a thermoplastic material. The ionic attractions that result strongly influence the polymer properties, especially its mechanical properties. In an ionomer, the non-polar chains are grouped together and the polar ionic groups are attracted to each other. This allows thermoplastic ionomers to act in ways similar to that of cross-linked polymers or block copolymers, but in fact they are called reversible cross-linkers. When heated, the ionic groups lose their attractions for each other and the chains become mobile. The chains motion increases with increasing temperature and the groups can no longer stay in their clusters.

In particular embodiments, the ionomer can be:
- a copolymer comprising one or more olefin monomers (such as ethylene, propylene, 1-butene, etc.) or styrene monomers (such as styrene, 2-methylstyrene, 3-methylstyrene, etc.), and one or more monomers comprising a functional group selected from the group comprising carboxylate, sulfonate, and a carboxylic acid anhydride;
- a grafted polyolefin or polystyrene comprising one or more functional groups selected from the group comprising carboxylate, sulfonate, a carboxylic acid anhydride, phosphonate, and phosphinate; preferably carboxylate, sulfonate, or a carboxylic acid anhydride, most preferably carboxylate.

Suitable ionomers can for example be selected from poly(ethylene-co-methacrylic acid). This polymer is a sodium or zinc salt of copolymers derived from ethylene and methacrylic acid.

In particular embodiments, the ionomer is a copolymer comprising one or more olefin monomers; and one or more monomers comprising a functional group as described hereinabove. In further embodiments, the ionomer comprises from about 50 w% to about 99.8w% of olefin monomer(s); and from about 0.2 wt % to about 30 wt % of monomer(s) comprising a functional group. In yet further embodiments, the ionomer comprises from about 70 w% to about 98w% of olefin monomer(s); and from about 2 wt % to about 20 wt % of monomer(s) comprising a functional group.

Suitable ionomers include copolymers, particularly random copolymers, comprising:
- from about 50 w% to about 99.8w%, preferably from 70 to 98 wt%, of one or more monomers, preferably one or two monomers, selected from the group comprising ethylene, propylene, 1-butene, 1-pentene, 4-methyl-1-pentene, 1-hexene, 2-methylpropene, styrene, 2-methylstyrene, 3-methylstyrene, 4-methylstyrene, alpha-methylstyrene, cis and/or trans beta-methylstryrene, halogenated styrene isomers, vinyl chloride, vinylidene chloride, butadiene, acrylonitrile, methacrylonitrile, cyclopentene, and cyclohexene; copolymerized with
- from about 0.2 wt % to about 30 wt %, preferably from 2 to 20 wt% of one or more monomers, preferably one or two monomers, selected from the group comprising methacrylic acid, acrylic acid, maleic acid or a monoester thereof (such as monomethyl maleate), maleic anhydride, ethacrylic acid, fumaric acid or a monoester thereof (such as monomethyl fumarate), crotonic acid, itaconic acid or a monoester thereof (such as monomethyl itaconate), itaconic anhydride, vinyl sulfonic acid, 2-methacryloyloxy-ethanesulfonate, styrenesulfonic acid, 2-acrylamido-2-methylpropane sulfonic acid (AMPS), vinylphosphonic acid, 2-(methacryloyloxy)ethylphosphate, mesaconic acid, citraconic acid or a monoester thereof (such as monomethyl citraconic acid), glutaconic acid or a monoester thereof (such as monomethyl glutaconate), methylmaleic acid or a monoester thereof (such as monomethyl methylmaleate), methylmaleic anhydride, citraconic anhydride, glutaconic anhydride, endobicyclo-[2,2,1]-5-heptene-2,3-dicarboxylic acid or a monoester thereof (such as monomethyl ester of heptene-2,3-dicarboxylic acid), and endobicyclo-[2,2,1]-5-heptene-2,3-dicarboxylic acid anhydride.

For example, suitable ionomers include, ethylene-acrylic acid copolymers, ethylene-methacrylic acid copolymers, ethylene-itaconic acid copolymers, ethylene-maleic acid copolymers, ethylene-acrylic acid-methyl methacrylate copolymers, ethylene-methacrylic acid-vinyl acetate copolymers, ethylene-acrylic acid-vinyl alcohol copolymers, ethylene-propylene-acrylic acid copolymers, ethylene-styrene-acrylic acid copolymers, ethylene-methacrylic acid-acrylonitrile copolymers, ethylene-vinyl chloride-acrylic acid copolymers, ethylene-chlorotrifluoroethylene-methacrylic acid copolymers, etc.

In some embodiments, the ionomer is a (random) copolymer comprising:
- from about 50 w% to about 99.8w%, preferably from 70 to 99 wt%, of one or two monomers selected from the group comprising ethylene and propylene; copolymerized with
- from about 1 wt % to about 20 wt %, preferably from 1 to 15 wt% of one or more monomers selected from the group comprising methacrylic acid, acrylic acid, maleic acid or a monoester thereof, and maleic anhydride.

In some embodiments, preferred ionomers include poly(ethylene-co-methacrylic acid) (random) copolymers. Poly(ethylene-co-methacrylic acid) (random) copolymers are derived from ethylene and methacrylic acid monomers. Typically, such ionomers comprise from 0.1 to 20 wt%, more particularly from 0.1 to 15 wt%, methacrylic acid monomers. In certain embodiments, the ionomer comprises a sodium or zinc salt of poly(ethylene-co-methacrylic acid).

In certain embodiments, the ionomer is a grafted polyolefin or polystyrene comprising one or more functional groups selected from the group comprising carboxylate, sulfonate, a carboxylic acid anhydride, phosphonate, and phosphinate; preferably a carboxylate, sulfonate, or a carboxylic acid anhydride. In certain embodiments, the functional group comprises from about 0.1 to 15% of the molecular weight of the ionomer. In further embodiments, the ionomer is a polymer selected from the group comprising polyethylene, polypropylene, a polyethylene/polypropylene copolymer, polystyrene, said polymer being grafted with one or more compounds selected from the group comprising maleic anhydride, acrylic acid or a salt thereof, and methacrylic acid or a salt thereof.

Examples of suitable ionomers include polyethylene-acrylic acid graft copolymers, polypropylene-acrylic acid graft copolymers, etc.

In certain embodiments, the ionomer is a (random) zinc-sulfonated ethylene/propylene/5-ethylidene-2-norbornene terpolymer. Example of such ionomers are ionomers available under the tradename Thionic^{®}.

Suitable ionomers can be prepared by methods well known in the art such as, for example, as described in US patents 3,264,272, 3,404,134, and 3,355,319, each of which is hereby incorporated by reference.

Suitable commercially available ionomers include, but are not limited to, those known under the tradenames of Surlyn^{®} (DuPont), EEA Copolymer (ethylene-ethyl acrylate copolymer), Hycar^{®} (Goodrich), Iotek^{®} (ExxonMobil), AClyn^{®} (Honeywell International), Nafion^{®} (DuPont), and Thionic^{®} (Uniroyal).

The ionized or ionizable moieties of the ionomers may appear in proton or salt form. Typically, 5 to 100% of the ionized moieties of the ionomer, such as carboxylate, sulfonate, phosphonate, or phosphinate moieties, are neutralized with a suitable cation, such as Na⁺, Zn²⁺, NH₃⁺, Li⁺, K⁺, Ca²⁺, Mg²⁺, or combinations thereof. Preferred cations are Na⁺ and Zn²⁺.

In addition to the copolymer components, the ionomer may be further be copolymerized with any other unsaturated monomer than the olefin and ionized monomers described above. The additional monomer content of the copolymer is preferably at most 20 w%. Examples of additional unsaturated monomer include vinyl esters such as vinyl acetate or vinyl propionate; and (meth)acrylic acid esters such as methyl (meth)acrylate, ethyl (meth)acrylate, isopropyl (meth)acrylate, n-butyl (meth)acrylate, isobutyl (meth)acrylate, or 2-ethylhexyl (meth)acrylate. (Meth)acrylic acid as referred to herein means acrylic acid or methacrylic acid.

In some embodiments, the outer composition, the intermediate composition and/or the inner composition may contain additives, in particular additives suitable for rotational moulding, such as, by way of example, processing aids, mould-release agents, anti-slip agents, primary and secondary antioxidants, light stabilizers, anti-UV agents, compatibilizers, acid scavengers, flame retardants, fillers, nanocomposites, lubricants, antistatic additives, carbon nanotubes, nucleating/clarifying agents, antibacterial agents, plastisizers, colorants/pigments/dyes and mixtures thereof. Preferably outer composition, the intermediate composition and/or the inner composition comprises an anti-UV agent. Illustrative pigments or colorants include titanium dioxide, carbon black, cobalt aluminum oxides such as cobalt blue, and chromium oxides such as chromium oxide green. Pigments such as ultramarine blue, phthalocyanine blue and iron oxide red are also suitable. Specific examples of additives include lubricants and mould-release agents such as calcium stearate, zinc stearate, SHT, antioxidants such as Irgafos 168^{™}, Irganox 1010^{™}, and Irganox 1076^{™}, anti-slip agents such as erucamide, light stabilizers such as Cyasorb THT 4611 and 4802, tinuvin 622^{™} and tinuvin 326^{™}, and nucleating agents.

An overview of the additives that can be used in the skin/foam/skin structures produced in the process, may be found in Plastics Additives Handbook, ed. H. Zweifel, 5th edition, 2001, Hanser Publishers.

In some embodiments, the different components of each composition may be compounded together according to any known compounding method in the art, e.g. mixer, like a Banbury mixer, or an extruder, like a twin screw extruder.

The intermediate composition comprises at least one chemical blowing agent (CBA). In some embodiments, the intermediate composition can be provided as a powder. The biphasic composition comprises at least one chemical blowing agent (CBA).

In order to foam the intermediate layer a chemical blowing agent is included in the intermediate composition/biphasic composition, which causes the intermediate layer to foam under the appropriate conditions in the mould during rotational moulding. The chemical blowing step generally fulfils several requirements:
- preferably, the decomposition temperature range of the blowing agent is compatible with the processing temperature of the intermediate composition;
- preferably, the liberation of the blowing gas occurs within a defined temperature range of about 10 °C and is controllable during the process;
- preferably, the decomposition is not autocatalyzed in order to avoid overheating;
- preferably, the blowing gas is chemically inert, such as preferably nitrogen, carbon dioxide and water;
- preferably. the chemical blowing agent is homogeneously and easily incorporated in and compatible with the rest of the intermediate composition.

During a foaming process, at elevated temperatures, chemical blowing agents undergo chemical reactions that liberate gas, typically N₂, CO, CO₂ and NH₃ or water.

Chemical blowing agents that may be used may function according to three main processes:
- Irreversible reaction: AB --> C + gas. They can be selected from the group comprising azo compounds, hydrazine derivatives, semicarbazides, tetrazoles and nitroso compounds.
- Equilibrium reactions: AB <---> C + gas. They can be selected from the group comprising bicarbonates and carbonates.
- Combination of compounds that liberate gases as a result of their chemical interactions: A + BG --> AB + gas.

Suitable chemical blowing agents include:
Azo compounds such as for example azodicarbonamide decompose at a temperature range of from 160 to 215 °C and liberate about 220 ml/g of gas, mostly N₂, CO, CO₂, NH₃ and water.

Hydrazides such as for example or 4,4'-oxy-bis(benzenesulfohydrazide) (from example Genitron^{®}OB from LANXESS). It decomposes at a temperature range of from 140 to 160 °C and liberates 120 to 140 ml/g of gas, mostly N₂ and H₂O. This type of agent is particularly preferred as it is exothermic and releases only neutral gases.

Other examples include modified azodicarbonamide, i. e., azodicarbonamide modified with zinc oxide, calcium carbonate or the like to lower the decomposition temperature, 5-phenyltetrazole, dinitrosopentamethylene tetramine, azobisisobutyronitrile, diazoaminobenzene, oxybis(benzenesulfohydrazide) and the like.

Preferably, the chemical blowing agent is a hydrazide, preferably 4,4'-oxy-bis(benzenesulfohydrazide).

As used herein, the term "decomposition temperature" or "T_{decomp}" refers to the onset temperature at which the chemical blowing agent start to decompose.

The amount of blowing agent added to the intermediate composition can be of at least 0.2 wt% based on the total weight of the intermediate composition, preferably of at least 1.0 wt%. It is of at most 5.0 wt%, preferably of at most 4.0 wt%, preferably about 2.0 wt%. Preferably, the chemical blowing agent totally decomposes upon foaming.

While it is not necessary, additives which function to control or modify foam cell size or foam density or modify/control the activator temperature or rate of decomposition of the chemical blowing agent may also be included in the intermediate composition. Useful additives of this type include calcium carbonate, titanium dioxide, zinc oxide, talc, calcium stearate, nanocomposites, carbon nanotubes and the like. When present, the amount of these additives typically ranges from about 0.01 wt% to about 1 wt% (percent by weight), based on the weight of the intermediate composition.

In some embodiments, the density of the foamed layer is between 100 to 200 kg/m³.

In some embodiments, the thickness of the foamed layer can be ranging from 5 to 100 mm, preferably from 8 to 20 mm, according to the desired use of the skin/foam/skin structure.

In some embodiments, additional layers may be added in order to obtain desired properties such as for example barrier properties or good impact at low temperature. These additional layers are preferably prepared from polyamide, polyesters or ethylene/vinyl alcohol polymers (EVOH).

The various processes of rotational moulding according to the invention usually comprise the following stages:
a) loading of the mould,
b) rotation of the mould,
c) heating of the mould,
d) cooling and
   repeating steps a) to d) such as to produce the skin/foam/skin article and
e) release the article from the mould.

The mould can be made of any material known in the art for such a purpose. For example, the mould can be an aluminum or steel mould or composite mould.

The rotation of the mould is generally carried out around two perpendicular axes or even more axes using robotic machines.

The quantity of powder, pellets and/or of micropellets introduced into the mould depends on the size of the article and on the desired wall thickness.

The heating step can be carried out in an oven or by electric heating elements. In another preferred embodiment heating can be carried out with a mould heated by an oil-filled heating jacket, as in for example, the Leonardo^{®} rotomoulding machine from Persico^{®}. The heating temperature of the oven, electric heating elements or oil can vary from 150°C to 350°C. One generally uses a temperature of at least of 10°C higher, preferentially at least of 20°C higher, more preferentially at least of 30°C higher compared to the melting point of the layer that one wishes to mould. A heating temperature ranging from 160°C and 270°C is preferably used. In another embodiment, heating can also be carried out by microwaves.

The duration of the moulding varies according to dimensions and the thickness of rotomoulded article, it can be range from 5 to 300 minutes.

The rotational moulding can be carried out under inert gas in the absence of oxygen. In order to do so, one can for example add into the mould a compound which liberates carbon dioxide, such as dry ice. This can be for example together with the powder or pellets of the different components. Dry ice generates carbon dioxide during the heating and rotating steps of the moulding process. One can also purge the mould with a gas, such as nitrogen or CO₂, by injecting the gas after closing the mould.

The duration and the time of cooling step depends on the installation, on the dimensions of the article to be moulded and of the type of article which one wishes to obtain. As mentioned previously, it is possible to cool the mould and/or the article contained in the mould. To cool the mould from the outside, one can use air at room temperature, water between 5 and 25°C or oil between 5 and 80°C. To cool the article from the inside of the mould, one can inject air and/or inert gas such as nitrogen and/or spray water (like a mist) within the interior of the mould, for example at a temperature of 25°C. The time of cooling generally varies between 5 and 260 minutes depending on the thickness of the rotomoulded article and the process used for cooling. When the article has a thickness of more than 10 mm, the mould should preferably be cooled from both the inside of the mould and the outside, preferably using air or inert gas such as nitrogen or a spray of water (mist).

According to a mode of realization, the cooling of the mould and/or article obtained are done in just one step until a temperature ranging between room temperature and a temperature lower than 100°C is obtained.

Thereafter, the skin/foam/skin article is released from the mould.

The skin/foam/skin articles obtained by the present process are generally hollow parts without any welding lines, such as for examples structural parts, tanks, drums, containers, vats, jerrycans, cans, cisterns, boxes, bumpers, furniture (bath tubs), car parts such as car doors, car bodies and car seats, nautical and aquatic equipment, buoys, floats, airplane parts, boards, planks and joints. The skin/foam/skin article is preferably selected from the group comprising car parts. Among the car parts, one can for example quote the car body and car door and interior components such as the instrument panel and door handles

These skin/foam/skin articles can have one or more openings and/or inserts of plastic or metal and/or "kiss offs" which are reinforcing junctions or bridges between two surfaces within the article.

Skin/foam/skin Articles obtained by the rotational moulding process according to the invention preferably do not have a point of weakness. They preferably show homogeneous characteristics, such as for example a uniform thickness of the walls as well as a good surface aspects both internally and internally and externally, without any deformation, voids or other defects. In addition, the compositions used in the present process preferably do not present any sagging behavior during the rotomoulding process.

In particular, the skin/foam/skin articles obtained preferably have a very little shrinkage and warpage.

The present invention therefore also encompasses the skin/foam/skin articles obtained by the present process.

The following examples serve to merely illustrate the invention and should not be construed as limiting its scope in any way. While the invention has been shown in only some of its forms, it should be apparent to those skilled in the art that it is not so limited, but is susceptible to various changes and modifications without departing from the scope of the invention.

### EXAMPLES

### Material used

**TP-SEAL@ TRC-D-0045 Natural** commercially available from Total Refining & Chemicals is a polyethylene with 1-hexene as comonomer and available in natural pellets but ground to a powder (35 Mesh Powder). It has a melt flow index of 5.5 g/10 min determined according to ISO 1133-1:2011 at 190°C, 2.16 kg and a density of 0.934 g/cm³ determined according to ISO 1183:2012. The melting temperature is 123°C, determined by Differential scanning calorimetry (DSC), according to ISO 11357 during the first heating at 10°C/min.

**TP-SEAL@ TRC-D-0045 White** commercially available from Total Refining & Chemicals is a polyethylene with 1-hexene as comonomer and available in natural pellets but ground to a powder (35 Mesh Powder). It has a melt flow index of 6.5 g/10 min determined according to ISO 1133-1:2011 at 190°C, 2.16 kg and a density of 0.934 g/cm³ determined according to ISO 1183:2012. The melting temperature is 123°C, determined by Differential scanning calorimetry (DSC), according to ISO 11357 during the first heating at 10°C/min.

**TP-SEAL@ TPS_0007_C02** commercially available from Total Refining & Chemicals is a metallocene high density polyethylene (mHDPE) with 1-hexene as comonomer and available provided in pellets. It has a melt flow index of 3.8 g/10 min determined according to ISO 1133-1:2011 at 190°C, 2.16 kg and a density of 0.947 g/cm³ determined according to ISO 1183:2012, and a melting temperature of 128°C determined by DSC according to ISO 11357 during the first heating at 10°C/min.

**TPSeal**^{®} **PE Foam 235** commercially available from Total Refining & Chemicals is a metallocene polyethylene with 1-hexene as comonomer, provided under a powder form (35 MESH) which contains Genitron^{®} OB from Lanxess Deutschland GmbH, as chemical blowing agent, allowing the product to expand during the rotomoulding process. It has a melt flow index of 3.8 g/10 min determined according to ISO 1133-1:2011 at 190°C, 2.16 kg and a density (of the PE used) of 0.940 g/cm³ determined according to ISO 1183:2012. TPeal^{®} PE Foam 235 has an expansion factor from 4 to 5. The melting temperature is 126°C, as determined by Differential scanning calorimetry (DSC), according to ISO 11357 during the first heating at 10°C/min.

Genitron^{®} OB from Lanxess Deutschland GmbH, is a 4',4'-oxy-bis(benzenesulfohydrazide) (CAS Reg No 80-51-3 (OBSH)) based blowing agent, the type of reaction is exothermic, producing N₂ and H₂O gasses, with a gas yield of 120 to 125 ml/g, and decomposes in applications at temperatures from 140 to 160 °C

**Polyethylene Lumicene**^{®} **mPE M3583 UV** commercially available from Total Refining & Chemicals is a metallocene medium density polyethylene with hexene as comonomer, provided under a powder form (35 Mesh Powder). It has a melt flow index of 6.0 g/10 min determined according to ISO 1133-1:2011 at 190°C, 2.16 kg, a density of 0.935 g/cm³ determined according to ISO 1183:2012, a melting temperature of 123 °C determined by Differential scanning calorimetry (DSC), according to ISO 11357 during the first heating at 10°C/min.

### Example 1: Production of Skin/Foam/Skin structure in three rotational moulding steps

Rotational moulding was carried out on a "Persico SMART" machine, equipped with a 7 litres Total Bottle test mould. The mould was heated by 3 electrical heating elements housed in grooves on the mould's outer surface.

### Outer skin formation

300 grams of TP-SEAL@ TRC-D-0045 was deposited in the mould at room temperature. This TP-SEAL@ TRC-D-0045 was rotation moulded inside the mould by raising the internal air temperature in the mould to PIATₒᵤₜₑᵣ of 215°C.

Some internal negative pressure or some internal positive pressure may be added in the mould during the heating of the mould. However, in this example no internal negative pressure or internal positive pressure was applied.

Once the PIATₒᵤₜₑᵣ was reached the mould was subjected to fast cooling until a temperature of 130 °C to 135 °C with a cooling rate of about 5°C / min inside the mould. The cooling can also be performed at 1°C / min for example. The mould was externally air cooled using fans.

### intermediate layer formation

300 grams of TPSeal^{®} PE Foam 235 was introduced in the mould wherein the outer skin has been formed. This TPSeal^{®} PE Foam 235 was rotation moulded inside the mould, on the inside of the outer skin, by raising the internal air temperature in the mould to PIAT_{intermediate} of 135°C, which is below the decomposition temperature of the CBA contained in TPSeal^{®} PE Foam 235.

Once the PIAT_{intermediate} was reached the mould was subjected to fast cooling until a temperature of 130°C to 135°C with a cooling rate of about 5°C / min inside the mould. The cooling can also be performed at 1°C / min for example. The mould was externally air cooled using fans.

### Inner skin formation and foam formation

200 grams of polyethylene Lumicene M3583UV was introduced in the mould wherein the outer skin and the intermediate layer has been formed. This Lumicene M3583UV was rotation moulded inside the mould, on the inside of the intermediate layer, by raising the internal air temperature in the mould to PIATᵢₙₙₑᵣ of 145°C to 150°C, which induces the decomposition of the CBA contained in TPSeal^{®} PE Foam 235.

Once the PIATᵢₙₙₑᵣ was reached the mould was subjected to fast cooling until a temperature below 100°C with a cooling rate of about 5°C / min inside the mould. The cooling can also be performed at 1°C / min for example. The mould was externally air cooled using fans.

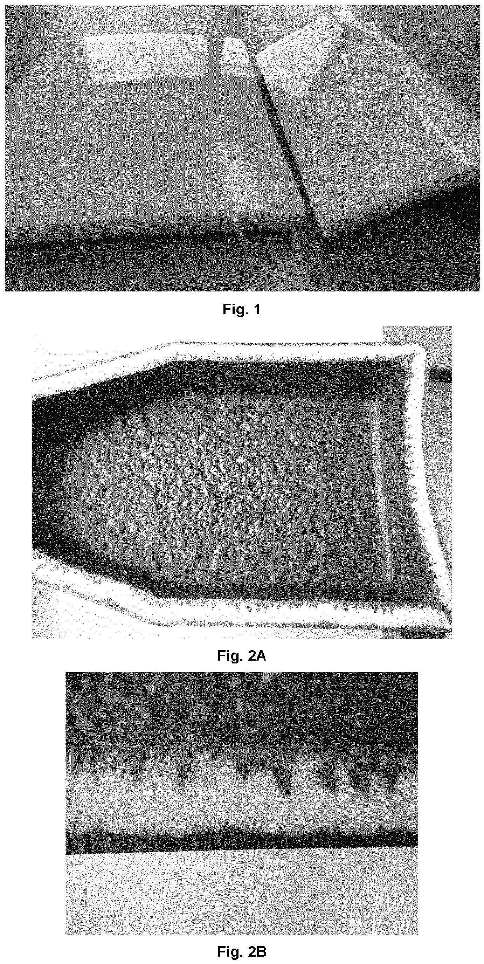

Figure 1 is a photograph of a segments of the produced skin/foam/skin structure. The outer surface shows a high surface finish, which are suitable for car bodies and that without the use of paint.

### Example 2: Production of Skin/Foam/Skin structure in three rotational moulding steps with PIATᵢₙₙₑᵣ plateau

Rotational moulding was carried out on a "Persico SMART" machine, equipped with a 7 litres Total Bottle test mould. The mould was heated by 3 electrical heating elements housed in grooves on the mould's outer surface.

### Outer skin formation

300 grams of TP-SEAL@ TRC-D-0045 was deposited in the mould at room temperature. This TP-SEAL@ TRC-D-0045 was rotation moulded inside the mould by raising the internal air temperature in the mould to PIATₒᵤₜₑᵣ of 215°C.

Some internal negative pressure or some internal positive pressure may be added in the mould during the heating of the mould. However, in this example no internal negative pressure or internal positive pressure was applied.

Once the PIATₒᵤₜₑᵣ was reached the mould was subjected to fast cooling until a temperature of 130 °C to 135 °C with a cooling rate of about 5°C / min inside the mould. The cooling can also be performed at 1°C / min for example. The mould was externally air cooled using fans.

### intermediate layer formation

300 grams of TPSeal^{®} PE Foam 235 was introduced in the mould wherein the outer skin has been formed. This TPSeal^{®} PE Foam 235 was rotation moulded inside the mould, on the inside of the outer skin, by raising the internal air temperature in the mould to PIAT_{intermediate} of 135°C, which is below the decomposition temperature of the CBA contained in TPSeal^{®} PE Foam 235.

Once the PIAT_{intermediate} was reached the mould was subjected to fast cooling until a temperature of 130°C with a cooling rate of about 5°C / min inside the mould. The cooling can also be performed at 1°C / min for example. The mould was externally air cooled using fans.

### Inner skin formation and foam formation

200 grams of polyethylene Lumicene M3583UV was introduced in the mould wherein the outer skin and the intermediate layer has been formed. This Lumicene M3583UV was rotation moulded inside the mould, on the inside of the intermediate layer, by raising the internal air temperature in the mould to PIATᵢₙₙₑᵣ of 145°C to 150°C, which induces the decomposition of the CBA contained in TPSeal^{®} PE Foam 235.

Once the PIATᵢₙₙₑᵣ was reached, the internal air temperature was kept between 145°C and 150°C for a duration of 5 minutes, before the mould was subjected to fast cooling until a temperature below 100°C with a cooling rate of about 5°C / min inside the mould. The cooling can also be performed at 1°C / min for example. The mould was externally air cooled using fans. Once the mould was at a temperature below 100°C, the part was demoulded. The demoulded part showed, compared to Example 1, a different structure of the foam layer.

### Example 3: Production of Skin/Foam/Skin structure in two rotational moulding steps

Rotational moulding was carried out on a "Persico SMART" machine, equipped with a 7 litres Total Bottle test mould. The mould was heated by 3 electrical heating elements housed in grooves on the mould's outer surface.

### Outer skin formation

450 grams of TP-SEAL@ TPS_0007_C02 was deposited in the mould at room temperature. The TP-SEAL@ TPS_0007_C02 was rotation moulded inside the mould by raising the internal air temperature in the mould to PIATₒᵤₜₑᵣ of 215°C.

Some internal negative pressure or some internal positive pressure may be added in the mould during the heating of the mould. However, in this example no internal negative pressure or internal positive pressure was applied.

Once the PIATₒᵤₜₑᵣ was reached the mould was subjected to fast cooling until a temperature of 130°C to 135°C with a cooling rate of about 5°C / min inside the mould. The cooling can also be performed at 1°C / min for example. The mould was externally air cooled using fans.

### Foam layer and inner layer formation

A dry blend was prepared comprising:
- 400 grams of TPSeal^{®} PE Foam 235 in powder form; and
- 450 grams of TP-SEAL@ TPS_0007_C02 in pellet form,
said dry blend forming a bi-phasic composition.

The dry-blend was introduced in the mould wherein the outer skin has been formed. This dry blend was rotation moulded inside the mould, on the inside of the outer skin, by raising the internal air temperature in the mould to PIAT_{intermediate} of 135°C, which is above the melt temperature of TPSeal^{®} PE Foam 235 in powder form, but below the decomposition temperature of the CBA contained in TPSeal^{®} PE Foam 235.

Once the PIAT_{intermediate} was reached, the internal air temperature was maintained for 5 minutes, before the internal air temperature was further increased to PIATᵢₙₙₑᵣ of 145°C -150°C, a temperature inducing the decomposition of the CBA in TPSeal^{®} PE Foam 235.

Once the PIATᵢₙₙₑᵣ was reached, the internal air temperature was kept between 145°C and 150°C for a duration of 5 minutes, before the mould was subjected to fast cooling until a temperature below 100°C with a cooling rate of about 5°C / min inside the mould. The cooling can also be performed at 1°C / min for example. The mould was externally air cooled using fans. The skin/foam/skin article was then removed from the mould.

Figure 2A and Figure 2B represents photographical images of a cross section of the formed part. In Figure 2B, the Skin/Foam/Skin structure can be seen, wherein the outer skin is the layer at the bottom, and the inner skin is the layer at the top.

### Example 4: Production of Skin/Foam/Skin structure in three rotational moulding steps

Rotational moulding was carried out on a "Robomould ^{®}" machine from AMS, equipped with a 7 litres Total Bottle test mould. The mould was heated by 3 electrical heating elements housed in grooves on the mould's outer surface.

### Outer skin formation

400 grams of TP-SEAL@ TRC-D-0045 White was deposited in the mould at room temperature. This TP-SEAL@ TRC-D-0045 was rotation moulded inside the mould by raising the internal air temperature in the mould to PIATₒᵤₜₑᵣ of 216°C.

Some internal negative pressure or some internal positive pressure may be added in the mould during the heating of the mould. However, in this example no internal negative pressure or internal positive pressure was applied.

Once the PIATₒᵤₜₑᵣ was reached the mould was subjected to fast cooling until a temperature of about 135 °C with a cooling rate of about 15°C / min inside the mould. The mould was externally air cooled using fans.

### Intermediate layer formation

400 grams of TPSeal^{®} PE Foam 235 was introduced in the mould wherein the outer skin has been formed. This TPSeal^{®} PE Foam 235 was rotation moulded inside the mould, on the inside of the outer skin, by raising the internal air temperature in the mould to PIAT_{intermediate} of 142°C, which is below the decomposition temperature of the CBA contained in TPSeal^{®} PE Foam 235.

Once the PIAT_{intermediate} was reached the mould was subjected to fast cooling until a temperature of about 130°C with a cooling rate of at least 5°C / min inside the mould. The mould was externally air cooled using fans.

### Inner skin formation and foam formation

200 grams of TP-SEAL@ TRC-D-0045 White was introduced in the mould wherein the outer skin and the intermediate layer has been formed. This TP-SEAL@ TRC-D-0045 White was rotation moulded inside the mould, on the inside of the intermediate layer, by raising the internal air temperature in the mould to PIATᵢₙₙₑᵣ of 150°C, which induces the decomposition of the CBA contained in TPSeal^{®} PE Foam 235.

Once the PIATᵢₙₙₑᵣ was reached the mould was subjected to fast cooling until a temperature below 110°C with a cooling rate of about 5°C / min inside the mould. The mould was externally air-cooled using fans. Once a temperature below 110°C was reached, the skin/foam/skin article was removed from the mould for further analysis.

The skin/foam/skin article was cut in half perpendicular on a flat outer surface of the article, and the thickness of the layers was examined. On average the thickness of the outer skin was 2 mm. On average the thickness of the intermediate foam layer was 7 mm. On average the thickness of the inner skin was 1 mm.

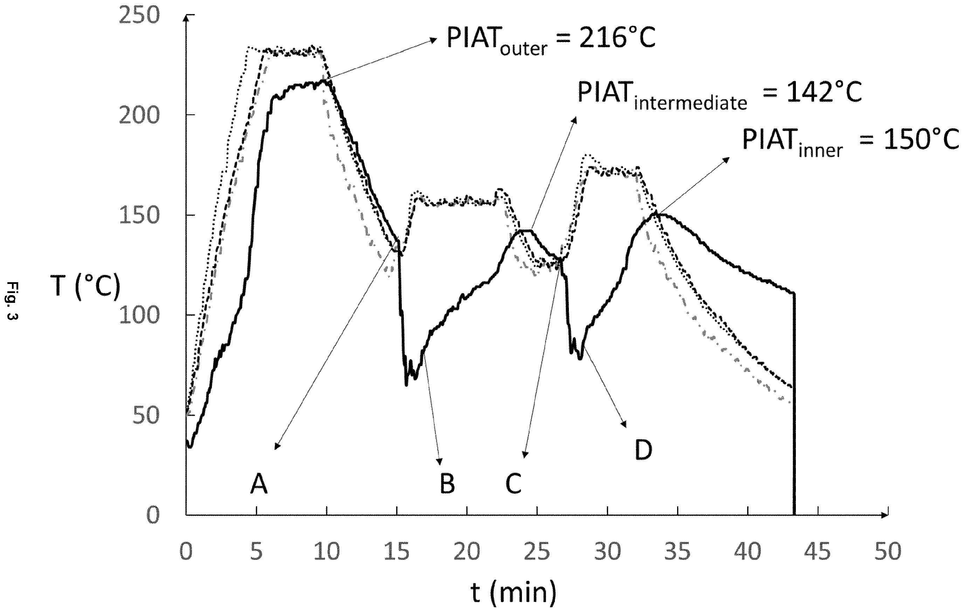

Figure 3 is a temperature (T) recording in function of the time (t) of the process described in Example 4. The three dotted lines represent the external mould temperature, one for each electrical heating element. The full line represents the internal air temperature.

The material for forming the outer skin, was present in the mould at t = 0 min, the internal air temperature probe was present inside the mould at t = 0 min.

At point A in Figure 3, the material for forming the intermediate layer was introduced in the mould. For practical reasons the internal air temperature probe was removed while introducing said material. At point B, the internal air temperature probe was reinstalled in the mould.

At point C in Figure 3, the material for forming the inner skin was introduced in the mould. For practical reasons, the internal air temperature probe was removed while introducing said material. At point D, the internal air temperature probe was reinstalled in the mould.

## Claims

1. Process for preparing a skin/foam/skin article, the process comprising at least the following steps:
a1) depositing an outer composition in a hollow mould, said outer composition having a melt temperature Tmₒᵤₜₑᵣ;
a2) rotational moulding said outer composition in the hollow mould, at an outer peak internal air temperature PIATₒᵤₜₑᵣ wherein Tmₒᵤₜₑᵣ < PIATₒᵤₜₑᵣ, thereby forming the outer skin layer,
b1) depositing an intermediate composition in the hollow mould which comprises the outer skin layer, said intermediate composition having a melt temperature Tm_{intermediate};
wherein said intermediate composition comprises at least one chemical blowing agent (CBA), said CBA having a decomposition temperature T_{decomp};
b2) rotational moulding said intermediate composition in the hollow mould, at an intermediate peak internal air temperature PIAT_{intermediate} wherein Tm_{intermediate} < PIAT_{intermediate} < T_{decomp}, thereby forming an intermediate layer;
c1) depositing an inner composition in the hollow mould, which comprises the outer skin layer and the intermediate layer, said inner composition having a melt temperature Tmᵢₙₙₑᵣ;
c2) rotational moulding said inner composition in the hollow mould at an inner peak internal air temperature PIATᵢₙₙₑᵣ wherein T_{decomp} < PIATᵢₙₙₑᵣ, thereby foaming the intermediate layer and forming the inner skin layer,
thereby obtaining said skin/foam/skin article.

2. Process for preparing a skin/foam/skin article, the process comprising at least the following steps:
a1) depositing an outer composition in a hollow mould, said outer composition having a melt temperature Tmₒᵤₜₑᵣ;
a2) rotational moulding said outer composition in the hollow mould at an outer peak internal air temperature PIATₒᵤₜₑᵣ wherein Tmₒᵤₜₑᵣ < PIATₒᵤₜₑᵣ, thereby forming the outer skin layer;
d1) depositing a bi-phasic composition in the hollow mould, which comprises the outer skin layer, said bi-phasic composition comprising:
- a powder phase having a melt temperature Tm_{powder}; and,
- a pellet phase or micro-pellet phase having a melt temperature Tmₚₑₗₗₑₜ wherein Tm_{powder} ≤ Tmₚₑₗₗₑₜ; preferably Tm_{powder} < Tmₚₑₗₗₑₜ;
- wherein said powder phase comprises at least one chemical blowing agent (CBA), said CBA having a decomposition temperature T_{decomp} wherein Tm_{powder} < T_{decomp} and Tmₚₑₗₗₑₜ < T_{decomp};
d2) rotational moulding said bi-phasic composition in the hollow mould, at an intermediate peak internal air temperature PIAT_{intermediate} wherein Tm_{powder} < PIAT_{intermediate} < T_{decomp} and Tmₚₑₗₗₑₜ < PIAT_{intermediate} < T_{decomp}, thereby forming an intermediate layer;
d3) rotational moulding said bi-phasic composition in the hollow mould, at an inner peak internal air temperature PIATᵢₙₙₑᵣ wherein T_{decomp} < PIATᵢₙₙₑᵣ, thereby foaming the intermediate layer and forming the inner skin layer, thereby obtaining said skin/foam/skin article.

3. The process according to any one of claims 1 to 2, whereby the rotational moulding is performed on a direct heating rotational moulding machine.

4. The process according to any one of the previous claims, wherein PIATₒᵤₜₑᵣ, is at least 20°C higher than the melt temperature of the outer composition (Tmₒᵤₜₑᵣ), preferably at least 40°C higher than Tmₒᵤₜₑᵣ, preferably at least 50°C higher than Tmₒᵤₜₑᵣ, preferably at least 60°C higher than Tmₒᵤₜₑᵣ, preferably at least 70°C higher than Tmₒᵤₜₑᵣ, preferably at least 80°C higher than Tmₒᵤₜₑᵣ, preferably at least 90°C higher than Tmₒᵤₜₑᵣ, preferably at least 90°C higher than Tmₒᵤₜₑᵣ.

5. The process according to any one of the previous claims, wherein PIATₒᵤₜₑᵣ is at least 160°C, preferably at least 170°C, preferably at least 180°C, preferably at least 190°C, preferably at least 200°C, preferably at least 210°C, preferably at least 220°C.

6. The process according to any one of the previous claims, wherein PIAT_{intermediate} is at least 2°C higher than the melt temperature of the intermediate composition Tm_{intermediate} and at least 4°C lower than T_{decomp}, preferably at least 3°C higher than Tm_{intermediate} and at least 5°C lower than T_{decomp}, preferably at least 4°C higher than Tm_{intermediate} and at least 5°C lower than T_{decomp}, preferably at least 5°C higher than Tm_{intermediate} and at least 5°C lower than T_{decomp}, preferably at least 7°C higher than Tm_{intermediate} and at least 5°C lower than T_{decomp}, preferably at least 10°C higher than Tm_{intermediate} and at least 5°C lower than T_{decomp}.

7. The process according to any one of the previous claims, wherein PIATᵢₙₙₑᵣ is lower than PIATₒᵤₜₑᵣ, preferably at least 10°C lower than PIATₒᵤₜₑᵣ, preferably at least 20°C lower than PIATₒᵤₜₑᵣ, preferably at least 30°C lower than PIATₒᵤₜₑᵣ, preferably at least 35°C lower than PIATₒᵤₜₑᵣ.

8. The process according to any one of the previous claims, wherein PIATᵢₙₙₑᵣ is at most 170°C, preferably PIATᵢₙₙₑᵣ is at most 165°C, preferably PIATᵢₙₙₑᵣ is at most 160°C, preferably PIATᵢₙₙₑᵣ is at most 155°C, preferably PIATᵢₙₙₑᵣ is at most 152°C.

9. The process according to any one of the previous claims, wherein PIATᵢₙₙₑᵣ is maintained for at least ½ min to at most 10 min, preferably at least 1 min to at most 9 min, preferably at least 2 min to at most 8 min, preferably at least 3 min to at most 7 min, preferably at least 4 min to at most 6 min, preferably for 5 min.

10. The process according to any one of the previous claims, wherein the outer composition, the intermediate composition and the inner composition comprises a polyethylene.

11. The process according to any one of the previous claims, wherein the polyethylene in the outer composition, the intermediate composition and/or the inner composition is a metallocene-produced polyethylene or a blend of different polyethylene technologies.

12. The process according to any one of the previous claims, wherein the polyethylene in the outer composition, the intermediate composition and/or the inner composition is polyethylene copolymer, preferably a polyethylene copolymer wherein the comonomer is at least one C₃-C₂₀ alpha-olefin co-monomer, preferably C₃-C₁₂ alpha-olefins, preferably said comonomer can be being selected from propylene, n-butene, iso-butene, n-pentene, iso-pentene, 1-hexene, 2-hexene, 3-hexene, 1-octene, 1-decene, 1-dodecene, 1-tetradecene, 1-hexadecene, 1-octadecene, and 1-eicosene, or a mixture thereof; preferably 1-hexene.

13. A skin/foam/skin article obtained by a process according to any one of claims 1-12.

## Patentansprüche

1. Verfahren zur Herstellung einer Haut/eines Schaum/eines Hautartikels, wobei das Verfahren mindestens die folgenden Schritte umfasst:
a1) Abscheiden einer äußeren Zusammensetzung in einer Hohlform, wobei die äußere Zusammensetzung eine Schmelztemperatur Tmₒᵤₜₑᵣ aufweist;
a2) Rotationsformen der äußeren Zusammensetzung in der Hohlform bei einer äußeren maximalen inneren Ofentemperatur PIATₒᵤₜₑᵣ, wobei Tmₒᵤₜₑᵣ < PIATₒᵤₜₑᵣ, wodurch die äußere Hautschicht gebildet wird,
b1) Abscheiden einer intermediären Zusammensetzung in der Hohlform, die die äußere Hautschicht umfasst, wobei die intermediäre Zusammensetzung eine Schmelztemperatur Tm_{intermediate} aufweist;
wobei die intermediäre Zusammensetzung mindestens ein chemisches Treibmittel (CBA) umfasst, wobei das CBA eine Zersetzungstemperatur T_{decomp} aufweist;
b2) Rotationsformen der intermediären Zusammensetzung in der Hohlform bei einer intermediären maximalen inneren Ofentemperatur PIAT_{intermediate}, wobei Tm_{intermediate} < PIAT_{intermediate} < T_{decomp}, wodurch eine intermediäre Schicht gebildet wird;
c1) Abscheiden einer inneren Zusammensetzung in der Hohlform, die die äußere Hautschicht und die intermediäre Schicht umfasst, wobei die innere Zusammensetzung eine Schmelztemperatur Tmᵢₙₙₑᵣ aufweist;
c2) Rotationsformen der inneren Zusammensetzung in der Hohlform bei einer inneren maximalen inneren Ofentemperatur PIATᵢₙₙₑᵣ, wobei T_{decomp} < PIATᵢₙₙₑᵣ, wodurch die intermediäre Schicht aufgeschäumt und die innere Hautschicht gebildet wird,
wodurch die Haut/der Schaum/der Hautartikel erhalten wird.

2. Verfahren zur Herstellung einer Haut/eines Schaum/eines Hautartikels, wobei das Verfahren mindestens die folgenden Schritte umfasst:
a1) Abscheiden einer äußeren Zusammensetzung in einer Hohlform, wobei die äußere Zusammensetzung eine Schmelztemperatur Tmₒᵤₜₑᵣ aufweist;
a2) Rotationsformen der äußeren Zusammensetzung in der Hohlform bei einer äußeren maximalen inneren Ofentemperatur PIATₒᵤₜₑᵣ, wobei Tmₒᵤₜₑᵣ < PIATₒᵤₜₑᵣ, wodurch die äußere Hautschicht gebildet wird;
d1) Abscheiden einer zweiphasigen Zusammensetzung in der Hohlform, die die äußere Hautschicht umfasst, wobei die zweiphasige Zusammensetzung umfasst:
- eine Pulverphase mit einer Schmelztemperatur Tm_{powder}; und
- eine Pelletphase oder Mikropelletphase mit einer Schmelztemperatur Tmₚₑₗₗₑₜ, wobei Tm_{powder} ≤ Tmₚₑₗₗₑₜ; vorzugsweise Tm_{powder} < Tmₚₑₗₗₑₜ;
- wobei die Pulverphase mindestens ein chemisches Treibmittel (CBA) umfasst, wobei das CBA eine Zersetzungstemperatur T_{decomp} aufweist, wobei Tm_{powder} < T_{decomp} und Tmₚₑₗₗₑₜ < T_{decomp},
d2) Rotationsformen der zweiphasigen Zusammensetzung in der Hohlform bei einer intermediären maximalen inneren Ofentemperatur PIAT_{intermediate}, wobei Tm_{powder} < PIAT_{intermediate} < T_{decomp} und Tmₚₑₗₗₑₜ < PIAT_{intermediate} < T_{decomp}, wodurch eine intermediäre Schicht gebildet wird;
d3) Rotationsformen der zweiphasigen Zusammensetzung in der Hohlform bei einer inneren maximalen inneren Ofentemperatur PIATᵢₙₙₑᵣ, wobei T_{decomp} < PIATᵢₙₙₑᵣ ist, wodurch die intermediäre Schicht aufgeschäumt und die innere Hautschicht gebildet wird,
wodurch die Haut/der Schaum/der Hautartikel erhalten wird.

3. Verfahren nach einem der Ansprüche 1 bis 2, wobei das Rotationsformen auf einer direkt beheizten Rotationsformmaschine durchgeführt wird.

4. Verfahren nach einem der vorhergehenden Ansprüche, wobei PIATₒᵤₜₑᵣ mindestens 20 °C höher als die Schmelztemperatur der äußeren Zusammensetzung (Tmₒᵤₜₑᵣ), vorzugsweise mindestens 40 °C höher als Tmₒᵤₜₑᵣ, vorzugsweise mindestens 50 °C höher als Tmₒᵤₜₑᵣ, vorzugsweise mindestens 60 °C höher als Tmₒᵤₜₑᵣ, vorzugsweise mindestens 70 °C höher als Tmₒᵤₜₑᵣ, vorzugsweise mindestens 80 °C höher als Tmₒᵤₜₑᵣ, vorzugsweise mindestens 90 °C höher als Tmₒᵤₜₑᵣ, vorzugsweise mindestens 90 °C höher als Tmₒᵤₜₑᵣ ist.

5. Verfahren nach einem der vorhergehenden Ansprüche, wobei PIATₒᵤₜₑᵣ mindestens 160 °C, vorzugsweise mindestens 170 °C, vorzugsweise mindestens 180 °C, vorzugsweise mindestens 190 °C, vorzugsweise mindestens 200 °C, vorzugsweise mindestens 210 °C, vorzugsweise mindestens 220 °C beträgt.

6. Verfahren nach einem der vorhergehenden Ansprüche, wobei PIAT_{intermediate} mindestens 2 °C höher als die Schmelztemperatur der intermediären Zusammensetzung Tm_{intermediate} und mindestens 4 °C niedriger als T_{decomp}, vorzugsweise mindestens 3 °C höher als Tm_{intermediate} und mindestens 5 °C niedriger als T_{decomp}, vorzugsweise mindestens 4 °C höher als Tm_{intermediate} und mindestens 5 °C niedriger als T_{decomp}, vorzugsweise mindestens 5 °C höher als Tm_{intermediate} und mindestens 5 °C niedriger als T_{decomp}, vorzugsweise mindestens 7 °C höher als Tm_{intermediate} und mindestens 5 °C niedriger als T_{decomp}, vorzugsweise mindestens 10 °C höher als Tm_{intermediate} und mindestens 5 °C niedriger als T_{decomp} ist.

7. Verfahren nach einem der vorhergehenden Ansprüche, wobei PIATᵢₙₙₑᵣ niedriger als PIATₒᵤₜₑᵣ ist, vorzugsweise mindestens 10 °C niedriger als PIATₒᵤₜₑᵣ, vorzugsweise mindestens 20 °C niedriger als PIATₒᵤₜₑᵣ, vorzugsweise mindestens 30 °C niedriger als PIATₒᵤₜₑᵣ, vorzugsweise mindestens 35 °C niedriger als PIATₒᵤₜₑᵣ.

8. Verfahren nach einem der vorhergehenden Ansprüche, wobei PIATᵢₙₙₑᵣ höchstens 170 °C beträgt, PIATᵢₙₙₑᵣ vorzugsweise höchstens 165 °C beträgt, PIATᵢₙₙₑᵣ vorzugsweise höchstens 160 °C beträgt, PIATᵢₙₙₑᵣ vorzugsweise höchstens 155 °C beträgt, PIATᵢₙₙₑᵣ vorzugsweise höchstens 152 °C beträgt.

9. Verfahren nach einem der vorhergehenden Ansprüche, wobei PIATᵢₙₙₑᵣ für mindestens ½ min bis höchstens 10 min, vorzugsweise mindestens 1 min bis höchstens 9 min, vorzugsweise mindestens 2 min bis höchstens 8 min, vorzugsweise mindestens 3 min bis höchstens 7 min, vorzugsweise mindestens 4 min bis höchstens 6 min, vorzugsweise 5 min aufrechterhalten wird.

10. Verfahren nach einem der vorhergehenden Ansprüche, wobei die äußere Zusammensetzung, die intermediäre Zusammensetzung und die innere Zusammensetzung ein Polyethylen umfassen.

11. Verfahren nach einem der vorhergehenden Ansprüche, wobei das Polyethylen in der äußeren Zusammensetzung, der intermediären Zusammensetzung und/oder der inneren Zusammensetzung ein mit Metallocen hergestelltes Polyethylen oder eine Mischung verschiedener Polyethylentechnologien ist.

12. Verfahren nach einem der vorhergehenden Ansprüche, wobei das Polyethylen in der äußeren Zusammensetzung, der intermediären Zusammensetzung und/oder der inneren Zusammensetzung ein Polyethylen-Copolymer ist, vorzugsweise ein Polyethylen-Copolymer, bei dem das Comonomer mindestens ein C₃-C₂₀-Alpha-Olefin-Comonomer, vorzugsweise C₃-C₁₂-Alpha-Olefine ist, wobei das Comonomer vorzugsweise aus Propylen, n-Buten, Isobuten, n-Penten, Isopenten, 1-Hexen, 2-Hexen, 3-Hexen, 1-Octen, 1-Decen, 1-Dodecen, 1-Tetradecen, 1-Hexadecen, 1-Octadecen und 1-Eicosen oder einem Gemisch davon; vorzugsweise 1-Hexen ausgewählt sein kann.

13. Haut/Schaum/Hautartikel, erhalten durch ein Verfahren gemäß einem der Ansprüche 1-12.

## Revendications

1. Procédé de préparation d'un article peau/mousse/peau, le procédé comprenant au moins les étapes suivantes :
a1) la dépose d'une composition extérieure dans un moule creux, ladite composition extérieure ayant une température de fusion Tmₒᵤₜₑᵣ ;
a2) le moulage par rotation de ladite composition extérieure dans le moule creux, à une température de l'air interne maximale extérieure PIATₒᵤₜₑᵣ, dans lequel Tmₒᵤₜₑᵣ < PIATₒᵤₜₑᵣ, formant ainsi la couche de peau extérieure,
b1) la dépose d'une composition intermédiaire dans le moule creux qui comprend la couche de peau extérieure, ladite composition intermédiaire ayant une température de fusion Tm_{intermediate} ;
dans lequel ladite composition intermédiaire comprend au moins un agent gonflant chimique (CBA), ledit CBA ayant une température de décomposition T_{decomp} ;
b2) le moulage par rotation de ladite composition intermédiaire dans le moule creux, à une température de l'air interne maximale intermédiaire PIAT_{intermediate}, dans lequel Tm_{intermediate} < PIAT_{intermediate} <T_{decomp}, formant ainsi une couche intermédiaire ;
c1) la dépose d'une composition intérieure dans le moule creux, qui comprend la couche de peau extérieure et la couche intermédiaire, ladite composition intérieure ayant une température de fusion Tmᵢₙₙₑᵣ ;
c2) le moulage par rotation de ladite composition intérieure dans le moule creux à une température de l'air interne maximale intérieure PIATᵢₙₙₑᵣ, dans lequel T_{decomp} < PIATᵢₙₙₑᵣ, faisant ainsi mousser la couche intermédiaire et formant la couche de peau intérieure,
obtenant ainsi ledit article peau/mousse/peau.

2. Procédé de préparation d'un article peau/mousse/peau, le procédé comprenant au moins les étapes suivantes :
a1) la dépose d'une composition extérieure dans un moule creux, ladite composition extérieure ayant une température de fusion Tmₒᵤₜₑᵣ ;
a2) le moulage par rotation de ladite composition extérieure dans le moule creux à une température de l'air interne maximale extérieure PIATₒᵤₜₑᵣ, dans lequel Tmₒᵤₜₑᵣ < PIATₒᵤₜₑᵣ, formant ainsi la couche de peau extérieure ;
d1) la dépose d'une composition biphasique dans le moule creux, qui comprend la couche de peau extérieure, ladite composition biphasique comprenant :
- une phase pulvérulente ayant une température de fusion Tm_{powder} ; et
- une phase de pastille ou une phase de micro-pastille ayant une température de fusion Tmₚₑₗₗₑₜ, dans lequel Tm_{powder} ≤ Tmₚₑₗₗₑₜ ; de préférence Tm_{powder} < Tmₚₑₗₗₑₜ ;
- dans lequel ladite phase pulvérulente comprend au moins un agent gonflant chimique (CBA), ledit CBA ayant une température de décomposition T_{decomp}, dans lequel Tm_{powder} <T_{decomp} et Tmₚₑₗₗₑₜ <T_{decomp} ;
d2) le moulage par rotation de ladite composition biphasique dans le moule creux, à une température de l'air interne maximale intermédiaire PIAT_{intermediate}, dans lequel Tm_{powder} < PIAT_{intermediate} <T_{decomp} et Tmₚₑₗₗₑₜ < PIAT_{intermediate} < T_{decomp}, formant ainsi une couche intermédiaire ;
d3) le moulage par rotation de ladite composition biphasique dans le moule creux, à une température de l'air interne maximale intérieure PIATᵢₙₙₑᵣ, dans lequel T_{decomp} < PIATᵢₙₙₑᵣ, faisant ainsi mousser la couche intermédiaire et formant la couche de peau intérieure, obtenant ainsi ledit article peau/mousse/peau.

3. Procédé selon l'une quelconque des revendications 1 à 2, moyennant quoi le moulage par rotation est effectué sur une machine de rotomoulage à chauffage direct.

4. Procédé selon l'une quelconque des revendications précédentes, dans lequel PIATₒᵤₜₑᵣ est d'au moins 20 °C supérieure à la température de fusion de la composition extérieure (Tmₒᵤₜₑᵣ), de préférence d'au moins 40 °C supérieure à Tmₒᵤₜₑᵣ, de préférence d'au moins 50 °C supérieure à Tmₒᵤₜₑᵣ, de préférence d'au moins 60 °C supérieure à Tmₒᵤₜₑᵣ, de préférence d'au moins 70 °C supérieure à Tmₒᵤₜₑᵣ, de préférence d'au moins 80 °C supérieure à Tmₒᵤₜₑᵣ, de préférence d'au moins 90 °C supérieure à Tmₒᵤₜₑᵣ, de préférence d'au moins 90 °C supérieure à Tmₒᵤₜₑᵣ.

5. Procédé selon l'une quelconque des revendications précédentes, dans lequel PIATₒᵤₜₑᵣ est d'au moins 160 °C, de préférence d'au moins 170 °C, de préférence d'au moins 180 °C, de préférence d'au moins 190 °C, de préférence d'au moins 200 °C, de préférence d'au moins 210 °C, de préférence d'au moins 220 °C.

6. Procédé selon l'une quelconque des revendications précédentes, dans lequel PIAT_{intermediate} est d'au moins 2 °C supérieure à la température de fusion de la composition intermédiaire Tm_{intermediate} et d'au moins 4 °C inférieure à T_{decomp}, de préférence d'au moins 3 °C supérieure à Tm_{intermediate} et d'au moins 5 °C inférieure à T_{decomp}, de préférence d'au moins 4 °C supérieure à Tm_{intermediate} et d'au moins 5 °C inférieure à T_{decomp}, de préférence d'au moins 5 °C supérieure à Tm_{intermediate} et d'au moins 5 °C inférieure à T_{decomp}, de préférence d'au moins 7 °C supérieure à Tm_{intermediate} et d'au moins 5 °C inférieure à T_{decomp}, de préférence d'au moins 10 °C supérieure à Tm_{intermediate} et d'au moins 5 °C inférieure à T_{decomp}.

7. Procédé selon l'une quelconque des revendications précédentes, dans lequel PIATᵢₙₙₑᵣ est inférieure à PIATₒᵤₜₑᵣ, de préférence d'au moins 10 °C inférieure à PIATₒᵤₜₑᵣ, de préférence d'au moins 20 °C inférieure à PIATₒᵤₜₑᵣ, de préférence d'au moins 30 °C inférieure à PIATₒᵤₜₑᵣ, de préférence d'au moins 35 °C inférieure à PIATₒᵤₜₑᵣ.

8. Procédé selon l'une quelconque des revendications précédentes, dans lequel PIATᵢₙₙₑᵣ est d'au plus 170 °C, de préférence PIATᵢₙₙₑᵣ est d'au plus 165 °C, de préférence PIATᵢₙₙₑᵣ est d'au plus 160 °C, de préférence PIATᵢₙₙₑᵣ est d'au plus 155 °C, de préférence PIATᵢₙₙₑᵣ est d'au plus 152 °C.

9. Procédé selon l'une quelconque des revendications précédentes, dans lequel PIATᵢₙₙₑᵣ est maintenue pendant au moins ½ min jusqu'à au plus 10 min, de préférence au moins 1 min jusqu'à au plus 9 min, de préférence au moins 2 min jusqu'à au plus 8 min, de préférence au moins 3 min jusqu'à au plus 7 min, de préférence au moins 4 min jusqu'à au plus 6 min, de préférence pendant 5 min.

10. Procédé selon l'une quelconque des revendications précédentes, dans lequel la composition extérieure, la composition intermédiaire et la composition intérieure comprennent un polyéthylène.

11. Procédé selon l'une quelconque des revendications précédentes, dans lequel le polyéthylène dans la composition extérieure, la composition intermédiaire et/ou la composition intérieure est un polyéthylène produit par métallocène ou un mélange de différentes technologies de polyéthylène.

12. Procédé selon l'une quelconque des revendications précédentes, dans lequel le polyéthylène dans la composition extérieure, la composition intermédiaire et/ou la composition intérieure est un copolymère de polyéthylène, de préférence un copolymère de polyéthylène dans lequel le comonomère est au moins un comonomère alpha-oléfine en C₃-C₂₀, de préférence des alpha-oléfines en C₃-C₁₂, de préférence ledit comonomère peut être choisi parmi le propylène, le n-butène, l'iso-butène, le n-pentène, l'iso-pentène, le 1-hexène, le 2-hexène, le 3-hexène, le 1-octène, le 1-décène, le 1-dodécène, le 1-tétradécène, le 1-hexadécène, le 1-octadécène et le 1-eicosène, ou leur mélange ; de préférence le 1-hexène.

13. Article peau/mousse/peau obtenu par un procédé selon l'une quelconque des revendications 1 à 12.
